(19) Europäisches Patentamt
European Patent Office
Office européen des brevets

(11) EP 1 381 765 B1

(12) # EUROPÄISCHE PATENTSCHRIFT

(45) Veröffentlichungstag und Bekanntmachung des Hinweises auf die Patenterteilung:
**12.07.2006 Patentblatt 2006/28**

(21) Anmeldenummer: **02704603.6**

(22) Anmeldetag: **23.01.2002**

(51) Int Cl.:
***F02D 41/34*** *(2006.01)* ***F02D 41/10*** *(2006.01)*
***F02D 41/12*** *(2006.01)* ***F02D 33/02*** *(2006.01)*

(86) Internationale Anmeldenummer:
**PCT/DE2002/000203**

(87) Internationale Veröffentlichungsnummer:
**WO 2002/073020 (19.09.2002 Gazette 2002/38)**

(54) **VERFAHREN UND VORRICHTUNG ZUR ERMITTLUNG VON EINSPRITZVENTILZEITGABEN UND FÜLLUNGSVORGABEN BEI EINER BRENNKRAFTMASCHINE**

METHOD AND DEVICE FOR DETERMINING INJECTION VALVE TIME SPECIFICATIONS AND FILLING SPECIFICATIONS IN AN INTERNAL COMBUSTION ENGINE

PROCEDE ET DISPOSITIF DE DETERMINATION DE DONNEES TEMPORELLES ET DE DONNEES DE REMPLISSAGE POUR UNE SOUPAPE D'INJECTION DANS UN MOTEUR A COMBUSTION INTERNE

(84) Benannte Vertragsstaaten:
**DE FR**

(30) Priorität: **09.03.2001 DE 10111260**

(43) Veröffentlichungstag der Anmeldung:
**21.01.2004 Patentblatt 2004/04**

(73) Patentinhaber: **ROBERT BOSCH GMBH**
**70442 Stuttgart (DE)**

(72) Erfinder:
- **GAESSLER, Hermann**
  **71665 Vaihingen (DE)**
- **DIEHL, Udo**
  **70195 Stuttgart (DE)**
- **MISCHKER, Karsten**
  **71229 Leonberg (DE)**
- **WALTER, Rainer**
  **74385 Pleidelsheim (DE)**
- **ROSENAU, Bernd**
  **71732 Tamm (DE)**
- **SCHIEMANN, Juergen**
  **71706 Markgroeningen (DE)**
- **GROSSE, Christian**
  **70806 Kornwestheim (DE)**
- **MALLEBREIN, Georg**
  **70825 Korntal-Muenchingen (DE)**
- **BEUCHE, Volker**
  **70372 Stuttgart (DE)**
- **REIMER, Stefan**
  **71706 Markgroeningen (DE)**

(56) Entgegenhaltungen:
**EP-A- 0 507 501** **DE-A- 3 623 041**
**DE-A- 10 001 062** **US-A- 5 546 909**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 381 765 B1

Printed by Jouve, 75001 PARIS (FR)

## Beschreibung

Die vorliegende Erfindung betrifft ein Verfahren und eine Vorrichtung zur Ermittlung von Einspritzventilzeitvorgaben und Füllungsvorgaben bei einer Brennkraftmaschine mit einer Vielzahl von Zylindern mit variablem Ventiltrieb mit jeweils einem Saugrohr bei einem Soll-Drehmomentsprung, wobei für jeden Zylinder ein Einspritzventil vorgesehen ist, das Kraftstoff in das Saugrohr einspritzt, wobei die Einspritzventilzeitvorgaben jedes Einspritzventils eine Grundeinspritzzeit zwischen einem Grundöffnungszeitpunkt und einem Grundschließzeitpunkt umfassen, sowie ein Verfahren und eine Vorrichtung zur Ermittlung von Einspritzzeitvorgaben und Füllungsvorgaben bei einer Brennkraftmaschine mit einer Vielzahl von Zylindern mit variablem Ventilbetrieb mit jeweils einem Saugrohr bei einem negativen Soll-Drehmomentsprung, wobei für jeden Zylinder ein Einspritzventil vorgesehen ist, das Kraftstoff in das Saugrohr einspritzt, wobei die Einspritzventilzeitvorgaben jedes Einspritzventils eine Grundeinspritzzeit zwischen einem Grundöffnungszeitpunkt und einem Grundschließzeitpunkt umfassen.

Aus der US 5 546 909 A ist bereits ein Verfahren bekannt, bei dem in Abhängigkeit von Betriebsparametern einer Brennkraftmaschine, insbesondere bei Lastwechseln, die Kraftstoffeinspritzung gesteuert wird. Hierzu werden insbesondere bei einem Wechsel der Betriebzustände die Einspritzpulse der Kraftstoffeinspritzung berechnet und korrigiert, um so die Kraftstoffversorgung den jeweiligen Betriebsbedingungen der Brennkraftmaschine anzupassen. Ein ähnliches Verfahren ist aus der DE 36 23 041 A1 bekannt.

Herkömmliche Automobilbrennkraftmaschinen arbeiten mit einer oder mit mehreren Nockenwellen zum Steuern der Motorventile, d. h. der Ein- und Auslassventile, nach einem vorgegebenen Hubprogramm. Mit der mechanischen Struktur der Nockenwelle ist das Hubprogramm festgelegt. Ein festgelegtes Hubprogramm lässt jedoch keinen optimalen Betrieb der Brennkraftmaschine zu, da im allgemeinen unterschiedliche Betriebszustände unterschiedliche optimale Hubprogramme erfordern.

Dass eine Verbesserung des Betriebs der Brennkraftmaschine durch Variieren der Zeitpunkte und des Hubs sowie der Beschleunigungsgeschwindigkeit und der Wege der Einlass- und Auslassventile in einem Verbrennungsmotor erzielt werden kann, ist allgemein bekannt. Ein zunehmender Einsatz von Mikroprozessor-Steuerungssystemen für Automobile und ein zunehmender Einsatz hydraulischer anstelle mechanischer Ventilansteuerungen ermöglicht einen deutlichen Fortschritt bei der Verbesserung des Betriebs von Brennkraftmaschinen.

Um einen Ladungswechsel bzw. Gasaustausch bei den Zylindern einer Brennkraftmaschine variabel zu steuern, sind folgende variable Ventiltriebe vorgeschlagen worden: eine elektromagnetische Ventilsteuerung (EMVS), eine elektrohydraulische Steuerung (EHVS) und mechanische Lösungen wie beispielsweise VANOS (Variable Nockenwellensteuerung bei der nur eine Phasenverstellung der Nockenwelle ausgeführt wird) in Verbindung mit VVT (VTT = Variable Valve Train).

Mittels der elektromagnetischen Ventilsteuerung und der elektrohydraulischen Ventilsteuerung ist es möglich, eine Brennkraftmaschine ohne Nockenwelle zu realisieren. Bei diesen Lösungen ist die Verstelldynamik von Arbeitsspiel zu Arbeitsspiel beliebig gross. Dies bedeutet, dass für jedes Arbeitsspiel eines Zylinders eine Gasfüllung des Zylinders unabhängig von einer vorhergehenden Füllung dieses Zylinders oder einer Füllung eines Zylinders, der in einer Zündreihenfolge vor diesem Zylinder angeordnet ist, eingestellt werden kann. Eine Änderungsdynamik der Füllung der Zylinder ist nicht mehr wie bei konventionellen Systemen durch einen "SaugrohrFülleffekt-Fülleffekt", d. h., durch das Volumen des Saugrohrs beschränkt.

Das Ziel der variablen Ventiltriebe ist die weitgehende odervollkommene Entdrosselung der Brennkraftmaschine. Dies bedeutet, dass eine Frischgas-Zylinderfüllung nicht mittels einer Drosselklappe gesteuert wird, sondern durch eine Steuerung von Ventilerhebungskurven der Einlassventile und der Auslassventile. Hauptsteuergrössen hierbei sind der Hub des Einlassventils und ein Winkel, bei dem das Einlassventil geschlossen wird.

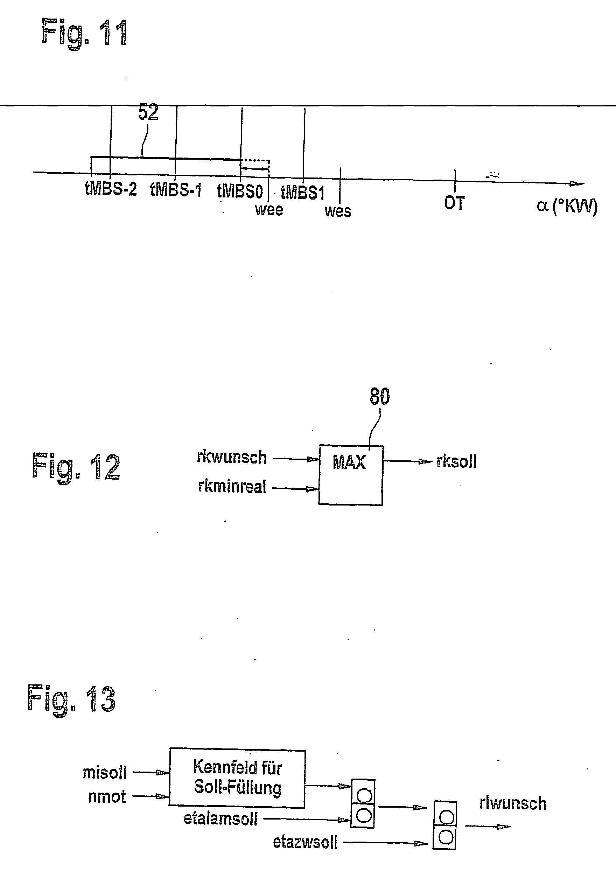

Figur 13 zeigt ein Modell, das eine Berechnung einer Wunschfüllung (rlwunsch) eines Zylinders mit Frischluft zur Realisierung eines Soll-Drehmoments zeigt, wie es in der Bosch-fVlotorsteuerung ME7 verwendet wird. Mittels einem Sollmoment misoll und einer Drehzahl nmot der Brennkraftmaschine als Eingangsgrössen wird aus einem Kennfeld für eine Soll-Füllung des Zylinders unter Berücksichtigung eines Soll-Lambdawirkungsgrades etalamsoll und eines gewünschten Zündwinkelwirkungsgrades etazwsoll eine Wunschfüllung rlwunsch des Zylinders mit Frischluft zur Realisierung eines induzierten Sollmoments berechnet. Die Wunschfüllung rlwunsch ist auf 100% bei einer Füllung des Hubvolumens des Zylinders mit Frischluft bei 1.013 mb bei 0°C normiert. Der Eingangswert misoll ist der Sollwert des induzierten Moments, der auf 100% bei einer Füllung mit 100% Frischluft, einem Lambda $\lambda$ = 1,0 und optimalem Zündwinkel normiert ist. Der Eingangswert nmot gibt eine Drehzahl der Brennkraftmaschine an.

Das in Figur 13 dargestellte Berechnungsmodell zur Berechnung der Wunschfüllung des Zylinders mit Frischluft zur Realisierung eines vorgegebenen Soll-Drehmoments wird heute bei Brennkraftmaschinen mit Drosselklappe verwendet. Für Brennkraftmaschinen mit variablem Ventiltrieb ist dieses Berechnungsmodell ungenügend. Die erzielbare Füllungsdynamik wäre zu hoch. Die dazugehörige Kraftstoffdosierung kann nicht mehr folgen.

Es ist die Aufgabe der vorliegenden Erfindung, ein einfaches Verfahren und eine einfache Vorrichtung zur Ermittlung von Einspritzventüzeitvorgaben und Füllungsvorgaben bei einer Brennkraftmaschine mit einer Vielzahl von Zylindern mit variablem Ventiltrieb anzugeben.

Diese Aufgabe wird mit einem Verfahren mit den Merkmalen des Anspruchs 1, mit einem Verfahren mit den Merkmalen des Anspruchs 7, mit einer Vorrichtung mit den Merkmalen des Anspruchs 11 und mit einer Vorrichtung mit den Merkmalen des Anspruchs 12 gelöst.

Vorteilhafte Ausführungsbeispiele der Erfindung ergeben sich aus den Unteransprüchen.

Vorteilhaft ermöglichen das Verfahren nach Anspruch 1 und das Verfahren nach Anspruch 7 eine schnelle Einstellung einer Frischluftfüllung der Zylinder dergestalt, dass ein Solldrehmomentsprung der Brennkraftmaschine schnellst möglich umgesetzt wird.

Eine vorteilhafte Ausgestaltung des Verfahrens der Erfindung nach Anspruch 7 ist insbesondere in dem Anspruch 10 angegeben. Diese vorteilhafte Ausgestaltung ermöglicht bei einem negativen Sprung des Soll-Drehmoments, d. h. bei einer Verringerung des Soll-Drehmoments, eine Einhaltung eines vorgegebenen Lambdas im Brennraum. Vorteilhaft ermöglicht dies einen kraftstoffeffizienten Betrieb der Brennkraftmaschine sowie eine verringerte Abgasemission der Brennkraftmaschine.

Erfindung gemäss wird ein positiver Soll-Drehmomentsprung auf ein höheres Soll-Drehmoment der Brennkraftmaschine ermittelt. Bei Ermittlung des positiven Soll-Drehmomentsprungs wird eine aktuell laufende Einspritzung eines Zylinders nach Möglichkeit so verlängert, dass gerade noch aller in ein Saugrohr der Brennkraftmaschine abgespritzte Kraftstoff in den Brennraum gelangt. Dabei wird die Flugzeit des Kraftstoffs vom Abspritzen des Kraftstoffs bis zum Erreichen des Brennraums des entsprechenden Zylinders berücksichtgt.

Vorteilhaft werden alle folgenden Einspritzungen bei diesem Zylinder und evtl. bei den weiteren Zylindern der Brennkraftmaschine solange verlängert bis eine neue Einspritzmenge erreicht ist, die dem höheren Soll-Drehmoment entspricht. Entsprechend der abspritzbaren Kraftstoffmenge und einem vorgegebenen Lambdawert wird der dynamische Anstieg der Soll-Füllung für jeden Zylinder vorgegeben.

Entsprechend der realisierbaren Kraftstoffdynamik kann vorteilhaft die Füllungsdynamik für ein Steuergerät mitvoll-variablerventilsteuerung begrenzt werden, so dass jederzeit das gewünschte Luft-Kraftstoffverhältnis umgesetzt werden kann.

Im folgenden werden Ausführungsbeispiele der vorliegenden Erfindung unter Bezugnahme auf die begleitenden Figuren beschrieben.

| | |
|---|---|
| Figur 1 | zeigt eine schematische Darstellung eines Zylinders einer Brennkraftmaschine mit variablem Ventiltrieb, die gemäss des Verfahrens der vorliegenden Erfindung betrieben wird; |
| Figur 2 | zeigt ein Ausführungsbeispiel eines Gaswechselstellers eines Einlassventils oder Auslassventils der Brennkraftmaschine von Figur 1; |
| Figur 3 | zeigt Ventilerhebungskurven eines Einlass- und eines Auslassventils der Brennkraftmaschine von Figur 1 und ein Ansteuersignal eines Einspritzventils der Brennkraftmaschine von Figur1 ; |
| Figuren 4a bis 4e | zeigen ein Ausführungsbeispiel der vorliegenden Erfindung; |
| Figur 5 | zeigt Ventilerhebungskurven von Auslass- und Einlassventilen, Ansteuersignale von Einspritzventilen und Zündzeitpunkte, die mittels des Verfahrens der Figuren 4a bis 4e ermittelt worden sind und Verlaufskurven von einem Sollmoment und einem erzielbarem Istmament; |
| Figur 6 | zeigt ein Diagramm zur Erläuterung des Verfahrens der Figuren 4a bis 4e; |
| Figur 7 | zeigt ein Diagramm zur Erläuterung des Verfahrens der Figuren 4a bis 4e; |
| Figuren 8 und 9 | zeigen Diagramme zur Erläuterung der Ermittlung einer realisierbaren Sollkraftstoffmenge und einer Soli-Frischluftfüllung für einen positiven Drehmomentsprung, wie sie in dem Verfahren der Figuren 4a bis 4e ausgeführt wird; |
| Figur 10 | zeigt Ventilerhebungskurven von Auslass- und Einlassventilen, Ansteuersignale von Einspritzventilen und Zündzeitpunkte, wie sie mittels des Verfahrens der Figuren 4a bis 4e bei einem negativen Soll-Drehmomentsprung ermittelt werden, und Verlaufskurven von Sollmoment und erzielbarem Istmoment; |
| Figur 11 | zeigt ein Diagramm zur Erläuterung des Verfahrens der Figuren 4a bis 4e; |

Figur 12 zeigt ein Diagramm zur Erläuterung der Ermittlung einer Soll-Kraftstoffüllung und einer Soll-Frischluftfüllung für einen negativen Solldrehmomentsprung, wie sie in den Verfahren der Figur 4a bis 4e ausgeführt wird; und

Figur 13 zeigt eine bekannte Umrechnung von induzierten Momenten in Füllungen unter Berücksichtigung von Lambdawirkungsgeraden und Zündwinkelwirkungsgeraden, wie sie in der Bosch-Motorsteuerung ME7 eingesetzt wird.

Figur 1 zeigt eine schematische Darstellung eines Zylinders einer beispielhaften Brennkraftmaschine mit variablem Ventiltrieb. Die Brennkraftmaschine ist eine Vierzylinderbrennkraftmaschine, wobei jedoch nur ein Zylinder schematisch dargestellt ist.

Die Bezugsziffer 1 in Figur 1 bezeichnet einen Kolben, der in Figur 1 vertikal versetzbar in einem Zylinder 2 angeordnet ist. Der Kolben 1 und der Zylinder 2 begrenzen einen Brennraum 3 des Zylinders 2. Die vertikale Bewegung des Kolbens 1 wird mittels einer Pleuelstange 4 zu einer Kurbelwelle 5 übermittelt und in eine Drehbewegung umgewandelt. Die Bezugsziffer 6 bezeichnet ein Saugrohr. Eine Seite des Saugrohrs 6 ist zum Ansaugen von Frischluft mit der Umgebung der Brennkraftmaschine verbunden. Eine andere Seite des Saugrohrs 6 ist über eine Ventilsitzöffnung 7 mit dem Brennraum 3 des Zylinders 2 verbunden. Die Ventilsitzöffnung 7 kann mittels eines Einlassventils 8 verschlossen werden. Das Einlassventil 8 wird mittels eines Gaswechselstellers 9 betätigt. In dem Saugrohr 6 der Brennkraftmaschine herrscht nahezu Umgebungsdruck, so dass ein Saugrohrfülleffekt vernachlässigt werden kann. Dies bedeutet, dass an dem Einlassventil 8 im wesentlichen immer ein Umgebungsdruck anliegt.

Die Bezugsziffer 10 bezeichnet ein Auspuffrohr des Zylinders 2, das über eine Ventilsitzöffnung 11 mit dem Brennraum 3 des Zylinders 2 verbunden ist. Die Ventilsitzöffnung 11 kann mittels eines Auslassventils 12, das mit einem Gaswechselsteller 13 betätigt wird, geöffnet und geschlossen werden. Der Gaswechselsteller 9 des Einlassventils 8 und der Gaswechselsteller 13 des Auslassventils 12 weisen im wesentlichen einen gleichen Aufbau auf und sind mit einer Druckversorgungseinrichtung 14, wie beispielsweise einem Common-Rail verbunden.

Die Bezugsziffer 15 bezeichnet ein Einspritzventil, das vor dem Einlassventil 8 in dem Saugrohr 6 der Brennkraftmaschine angeordnet ist. Diese Art der Einspritzung wird als Saugrohreinspritzung bezeichnet. Vorzugsweise ist das Einspritzventil 15 ein intermittierend angesteuertes Einspritzventil (beispielsweise eine Multipoint-Einspritzung) mit dem der Kraftstoff zylinderindividuell dosiertwerden kann. Die dosierte Kraftstoffmenge die eingespritzt wird, ist proportional zu einer Öffnungsdauer des Einspritzventils 15.

Die Bezugsziffer 16 bezeichnet eine Zündkerze, die in dem Brennraum 3 des Zylinders 2 zur Zündung des durch das Einlassventil 8 eingelassenen Kraftstoff-Luftgemisches angeordnet ist. In dem Auspuffrohr 10 des Zylinders 2 ist eine Lambdasonde 17 angeordnet zur Erfassung einer Zusammensetzung eines Abgases einer Verbrennung in dem Brennraum 3 des Zylinders 2, das durch Öffnung des Auslassventils 12 durch die Ventilsitzöffnung 11 in das Auspuffrohr 10 ausgelassen wird.

Die Gaswechselsteller 9 und 13, das Einspritzventil 15 und die Zündkerze 16 werden von einem nicht dargestellten Motorsteuergerät angesteuert. Ein Ausführungsbeispiel eines Aufbaus der Gaswechselsteller 9 und 13 wird im folgenden mit Verweis auf Figur 2 beschrieben.

Da der Aufbau der Gaswechselsteller 9 und 13 identisch ist, wird der Aufbau anhand des Gaswechselstellers 13 des Auslassventils 12 des Zylinders 2 beschrieben.

Die Bezugsziffer 18 bezeichnet ein erstes Magnetventil. Das erste Magnetventil 18 ist mit einer ersten Hydraulikverbindung 19 zwischen der in Figur 1 dargestellten Druckversorgungseinrichtung 14 und einer ersten Kammer 20 in einer Betätigungseinrichtung 21 angeordnet. In der Betätigungseinrichtung 21 ist ein Ventilfuss 22 des Auslassventils 12 angeordnet. Der Ventilfuss 22 ist in der Betätigungseinrichtung 21 in Figur 2 vertikal versetzbar angeordnet. Der Ventilfuss 22 trennt die erste Kammer 20 von einerzweiten Kammer 23 in der Betätigungseinrichtung 21.

Zwischen der zweiten Kammer 23 in der Betätigungseinrichtung 21 und der in Figur 1 dargestellten Druckversorgungseinrichtung 14 ist eine zweite Hydraulikverbindung 24 vorgesehen. Die erste Kammer 20 ist ferner über ein zweites Magnetventil 25 mit einem in Figur 1 nicht dargestellten Rücklaufsammler durch eine dritte Hydraulikverbindung 26 verbunden. Der Ventilfuss 22 und das Auslassventil 12 sind starr miteinander verbunden.

Der Betrieb des in Figur 2 dargestellten Gaswechselstellers 13 ist wie folgt: wenn das erste Magnetventil 18 von dem Motorsteuergerät derart angesteuert wird, das es geöffnet wird, strömt von der in Figur 1 dargestellten Druckversorgungseinrichtung 14 ein unter Druck stehendes Hydraulikmedium durch die erste Hydraulikverbindung 19 und das erste Magnetventil 18 in die erste Kammer 20. Das Hydraulikmedium füllt die erste Kammer 20 und versetzt den Ventilfuss 22, der die erste Kammer 20 von der zweiten Kammer 23 trennt. Dadurch wird das Auslassventil 12 in Figur 2 vertikal nach unten versetzt. Das Auslassventil 12 ist dergestalt angeordnet, dass das Auslassventil 12 in dem in Figur 1 dargestellten Ventilsitz 11 der Brennkraftmaschine sitzt, wenn der Ventilfuss 22 in Figur 2, ganz oben ist, d. h., kein Hydraulikmedium in der ersten Kammer 20 ist, also die erste Kammer 20 einen minimalen Raum aufweist und die zweite Kammer 23 einen maximalen Raum aufweist. In dieser Position verschliesst das Auslassventil 12 die Ventilsitzöffnung 11 zwischen dem Brennraum 3 und dem Auspuffrohr 10 der Brennkraftmaschine. Wenn die erste Kammer 20 mit dem Hydraulikmedium gefüllt wird, wird das Auslassventil 12 aus dem Ventilsitz 11 heraus in den Brennraum 3 des Zylinders 2 versetzt, und damit die Ventilsitzöffnung zwischen dem Auspuffrohr 10 und dem Brennraum 3 des Zylinders geöffnet. Wenn ein gewünschter Ventilhub erreicht ist, wird das erste Magnetventil 18 von dem Motorsteuergerät derart angesteuert, das es geschlossen wird.

Zum Schliessen des Auslassventils 12 wird von dem Motorsteuergerät das zweite Magnetventil 25 geöffnet, so dass das in der ersten Kammer 20 befindliche Hydraulikmedium durch das geöffnete zweite Magnetventil 25 und durch die dritte Hydraulikverbindung 26 zurückfliessen kann. Das von der Druckversorgungseinrichtung 14 unter Druck an die zweite Kammer 23 angelegte Hydraulikmedium strömt dann durch die zweite Hydraulikverbindung 24 in die zweite Kammer 23 und versetzt damit den Ventilfuss 22 in Figur 2 vertikal nach oben. Damit wird das Auslassventil 12 in den Ventilsitz 11 zurückversetzt und die Ventilsitzöffnung 11 zwischen dem Brennraum 3 und dem Auspuffrohr 10 verschlossen.

Das Motorsteuergerät ist mit der Druckversorgungseinrichtung 14 verbunden und bewirkt durch Ansteuerung der Druckversorgungseinrichtung 14 eine Veränderung des Drucks mit dem die Druckversorgungseinrichtung 14 das Hydraulikmedium an den Gaswechselsteller 13 anlegt. Durch Veränderung des Druck mit dem die Druckversorgungseinrichtung 14 das Hydraulikmedium an des Gaswechselsteller 13 anlegt, wird die Öffnungs- und Schliessgeschwindigkeit des Auslassventils 12 gesteuert.

Gaswechselsteller dieserArt ermöglichen für jedes Auslass- und jedes Einlassventil der Brennkraftmaschine eine individuelle Ventilansteuerung und damit einen individuellen Ventilhub, individuelle Ventilöffnungs- und schliesszeiten und individuelle Ventilöffnungs- und schliessgeschwindigkeiten. Dies bedeutet, dass für jedes Arbeitsspiel eines Zylinders eine Gasfüllung des Zylinders unabhängig von einer vorhergehenden Füllung dieses Zylinders oder einer Füllung eines Zylinders, der in einer Zündreihenfolge vor diesem Zylinder angeordnet ist, eingestellt werden kann.

Figur 3 zeigt ein Diagramm, das Ventilerhebungskurven von dem Einlassventil 8 und dem Auslassventil 12 bei einem Ladungswechsel, sowie einen Ansteuerimpuls für das Einspritzventil 15.

Entlang der Abszisse des Diagramms von Figur 3 ist ein Kurbelwinkel a der Kurbelwelle 5 der Brennkraftmaschine in Kurbelwinlceleinheiten °KW angetragen. Entlang der Ordinate des Diagramms von Figur 3 sind der Hub des Einlassventils 8 und des Auslassventils 12, sowie eine Amplitude des Ansteuerimpulses für das Einspritzventil 15 angetragen. Die Bezugsziffer 30 bezeichnet eine Ventilerhebungskurve des Auslassventils 12. Die Bezugsziffer 31 bezeichnet eine Ventilerhebungskurve des Einlassventils 8. Die Bezugsziffer 32 bezeichnet einen Ansteuerimpuls des Einspritzventils 15 den das Motorsteuergerät an das Einspritzventil anlegt. Die in dem Diagramm von Figur 3 dargestellten Ventilerhebungskurven 30 und 31 sowie der Ansteuerimpuls 32 des Einspritzventils 15 entsprechen dem Fall einer mittleren Drehzahl und einer mittleren Last der Brennkraftmaschine.

Wie dem Diagramm von Figur 3 zu entnehmen ist, wird bei dem Winkel $\alpha$EB das Einspritzventil 15 so angesteuert, dass es geöffnet wird. Einen Winkelbetrag späterwird bei dem Winkel $\alpha$AÖ das Auslassventil geöffnet bis es nach einem weiteren Winkelbetrag den Zielöffnungshub erreicht. Nach einem weiteren Winkelbetrag wird das Einspritzventil 15 bei dem Winkel $\alpha$EE angesteuert, so dass das Einspritzventil 15 geschlossen wird. Die Bezugsziffer 33 bezeichnet eine Flugzeit des Kraftstoffs von dem Einspritzventil 15 bis zu dem Brennraum 3. Wie dem Diagramm von Figur 3 zu entnehmen ist, beträgt die Kraftstofflugzeit 33 im vorliegenden Fall $\alpha$EÖ - $\alpha$EE (in Kurbelwinkeleinheiten), wobei $\alpha$EÖ der Öffnungszeitpunkt des Einlassventils 8 ist. Nach einem weiteren Winkelbetrag erreicht das Einlassventil 8 den gewünschten Öffnungshub. In etwa mit dem Erreichen des gewünschten Öffnungshubs des Einlassventils 8 wird das Auslassventil 12 zum Zeitpunkt $\alpha$AS wieder vollständig geschlossen. Die gestrichelte Linie der Ventilerhebungskurve 31 des Einlassventils 8 bezeichnet einen Einlassventil-Schüesswinkel $\alpha$ES bei Teillast der Brennkraftmaschine. Bei Vollast der Brennkraftmaschine verschiebt sich der Winkel Einlassventil-Schliesst $\alpha$ES, wie der durchgezogenen Linie der Ventilerhebungskurve 31 zu entnehmen ist, zu einem späteren Zeitpunkt.

Da die eingespritzte Kraftstoffmenge proportional zur Ansteuerzeit $\alpha$EE - $\alpha$EB des Einspritzventils 15 ist, ist demnach zum Erzielen einer Verdoppelung der einzuspritzenden Kraftstoffmenge eine doppelt so lange Ansteuerzeit des Einspritzventils 15 erforderlich. Eine ähnliche Abhängigkeit gilt bei einer Erhöhung der Drehzahl der Brennkraftmaschine. Bei einer Erhöhung der Drehzahl von der in der Figur 3 dargestellten Drehzahl von 2000 u/min auf eine Drehzahl von 6000 u/min wird der über den Kurbelwinkel angetragene Ansteuerimpuls 32 des Einspritzventils 15 dreimal so lang.

Dementsprechend überstreicht der Ansteuerimpuls 32 bei Vollast und hoher Drehzahl der Brennkraftmaschine einen grossen Wnkelbereich der Nockenwelle und meist mehr als eine Kurbelwellenumdrehung. Vorzugsweise ist das Einspritzventil 8 dergestalt ausgelegt, dass der Winkelbereich, der bei Vollast und hoher Drehzahl für den Ansteuerimpuls 32 des Einspritzventils 15 benötigt wird, kleiner als 720°kW ist und vorzugsweise bei 540°kW ist. Das Einlassventil 8 ist ferner dergestalt ausgelegt, dass auch bei Vollast und hoher Drehzahl auf jeden Fall vermieden wird, dass schon eingespritzt wird, wenn das Einlassventil 8 des vorhergehenden Arbeitsspiels noch offen ist. Die Auslegung des Einlassventils 8 betrifft eine Grösse der Ventilsitzöffnung 7, einen Hub des Einlassventils 8, eine Öffnungs- und Schliessgeschwindigkeit des Einlassventils 8 und eine Form eines Randes des Einlassventils 8 zur Vermeidung von Verwirbelungen.

Im folgenden wird mit Verweis auf die Figuren 4a bis 4e ein Ausführungsbeispiel der vorliegenden Erfindung beschrieben, das vorzugsweise in einem Motorsteuergerät, das eine Mikroprozessorsteuerung umfasst, ausgeführt wird, und das die in Figur 1 dargestellte Brennkraftmaschine steuert.

Nach dem Start Schritt .S1 wird in Schritt S2 ein Solldrehmoment einer Brennkraftmaschine erfasst. Hierzu wird ein Ausgangssignal eines Stellungssensors einer Leistungssteuereinrichtung der Brennkraftmaschine erfasst. Bei einem Kraftfahrzeug ist die Leistungssteuereinrichtung vorzugsweise als Gaspedal ausgebildet. Dann geht die Verarbeitung weiter zu Schritt S3, in dem ein Synchronisations-Raster mit einer Vielzahl von vorbestimmten Synchronisationszeitpunkten tMAS-1, tMAS0 tMAS+1, tMBS-1, tMBSO und tMBS+1 vorgegeben wird. Die Vielzahl von vorbestimmten Synchronisationszeitpunkten tMAS-1, tMAS0, tMAS+1, tMBS-1, tMBS0 und tMBS+ sind äquidistant und folgen einander in der Reihenfolge, die mit der Endzahl angegeben ist, d. h., der Synchronisationszeitpunkt tMA0 folgt unmittelbar dem Synchronisationszeitpunkt tMRS-1 und der Synchronisationszeitpunkt tMAS+1 folgt unmittelbar dem Synchronisationszeitpunkt tMAS0. Ebenfalls folgt der Synchronisationszeitpunkt tMBS0 unmittelbar dem Synchronisationszeitpunkt tMBS-1 und der Synchronisationszeitpunkt tMBS+1 folgt unmittelbar dem Synchronisationszeitpunkt tMBS0. Dann wird in Schritt S3 das Ausgangssignal des Stellungssensors zu den Synchronisationszeitpunkten tMAS-1, tMAS0, tMAS+1, tMBS-1, tMBS0 und tMBS+1 zur Erfassung von Solldrehmomentwerten MAS-1, MAS0, MAS+1, MBS-1, MBS0 und MBS+1 abgetastet.

In Schritt S4 werden jeweils aufeinanderfolgende Paare der Solldrehmomentwerte miteinander verglichen. So wird beispielsweise der Solldrehmomentwert MAS-1 mit dem Solldrehmomentwert MAS0 verglichen, dann der Solldrehmomentwert MAS+1 mit dem Solldrehmomentwert MAS0 etc. Wird in Schritt S4 erfasst, dass ein Solldrehmoment grösser als ein vorangehendes Solldrehmoment ist, wird ein positiver Solldrehmomentsprung an dem Zeitpunkt des Synchronisationszeitpunktes des folgenden, d. h. des später erfassten Solldrehmomentwerts, bestimmt. Bei einem Vergleich des Solldrehmomentwerts MAS0 mit dem Solldrehmomentwert MAS-1 wird dementsprechend ein positiver Solldrehmomentsprung an dem Synchronisationszeitpunkt tMAS0 bestimmt, wenn das Solldrehmoment MAS0 grösser ist als das Solldrehmoment MAS-1. Wenn in Schritt S4 ein positiver Solldrehmomentsprung an einem der Vielzahl von vorbestimmten Synchronisationszeitpunkten tMAS-1, tMAS0, tMAS+1, tMBS-1, tMBS0 und tMBS+1 erfasst wird, geht die Verarbeitung weiter zu Schritt S5, in dem eine Kraftstoff-Zielfüllung KFZMSA0 und eine entsprechende Einspritzventil-Öffnungszeit tiKFZMSA0 dergestalt berechnet wird, dass bei einem Einspritzen der Kraftstoff-Ziel-Füllung KFZMAS0 der Solldrehmomentwertdes erfassten Solldrehmomentsprungs erzielt wird. Dementsprechend wird in Schritt S5 bei Erfassung des positiven Solldrehmomentsprungs zum Zeitpunkt tMAS0 eine Kraftstoff-Ziel-Füllung KFZMAS0 dergestalt ermittelt, dass damit der Solldrehmomentwert MAS0 erzielt würde. Die Berechnung der Kraftstoff-Ziel-Füllung KFZMAS0 und der Einspritzventil-Öffnungszeit tiKFZMASO wird mit Verweis auf die Figuren 8 und 9 im einzelnen beschrieben.

Dann geht die Verarbeitung weiter zu Schritt S6, in dem ein Zähler n auf 0 zurückgesetzt wird: n = 0. Dann geht die Verarbeitung weiter zu Schritt S7, in dem der Zähler n um 1 inkrementiert wird: n = n + 1. Dann geht die Verarbeitung weiter zu Schritt S8, in dem ein Grund-Einspritzbeginn tigö1 eines ersten Zylinders bei dem ersten Durchlauf der Schleife der Schritte S7, S8 und S9 ermittelt wird. Der Grund-Einspritzbeginn tigö1 ist der Einspritzbeginn des Einspritzventils dieses Zylinders, der in dem Synchroraster vor Bestimmung des positiven Solldrehmomentsprungs zum Synchronisationszeitpunkt tMAS0 für das Einspritzventil für ein gleichbleibendes Solldrehmoment der Brennkraftmaschine für den ersten Zylinder eingestellt war. Der erste Zylinder ist derjenige Zylinder der Brennkraftmaschine, bei dem nach dem Synchronisationszeitpunkt tMAS0, bei dem der positive Solldrehmomentsprung bestimmt worden ist, die nächste Zündung stattfindet.

Dann geht die Verarbeitung weiter zu Schritt S9, in dem eine Abfrage stattfindet, ob der Zeitpunkt tigö1 vor oder auf dem Synchron isationszeitpunkt tMAS0 liegt. Ist die Abfrage in Schritt S9 positiv, d. h., liegt tigö1 vor oder auf dem Synchronisationszeitpunkt tMAS0, an dem der positive Solldrehmomentsprung bestimmt worden ist, geht die Verarbeitung zu Schritt S7, in dem der Zähler n um 1 inkrementiert wird. Der Zähler n weist dann einen Wert von 2 auf. Dann geht die Verarbeitung weiter zu Schritt S8, in dem dann der Grund-Einspritzbeginn tigö2 eines zweiten Zylinders erfasst wird. Der Grund-Einspritzbeginn tigö2 ist der Einspritzbeginn des Einspritzventils des zweiten Zylinders, der für das Einspritzventil des Zylinders des zweiten Zylinders für ein gleichbleibendes Solldrehmoment der Brennkraftmaschine vor dem Synchronisationszeitpunkt tMAS0 an dem der positive Solldrehmomentsprung festgestellt worden ist, eingestellt war. Der zweite Zylinder ist der Zylinder, dessen Zündung der Zündung des ersten Zylinders als nächstes folgt. Dann geht die Verarbeitung weiter zu Schritt S9, in dem die Abfrage stattfindet, ob der Grund-Einspritzbeginn tigö2 vor oder auf dem Synchronisationszeitpunkt tMAS0 liegt. Die Schleife der Schritte S7, S8 und S9 wird solange wiederholt, bis ein n'ter Zylinder ermittelt wird, dessen Grund-Einspritzbeginn tigön zeitlich nach dem Synchronisationszeitpunkt tMAS0 liegt. Die Schleife der Schritte S7, S8 und S9 erfasst, ob vor dem Zeitpunkt des Synchronisationszeitpunktes tMAS0 ein Einspritzventil der Brennkraftmaschine geöffnet worden ist. Wenn die Abfrage in Schritt S9 negativ ist, geht die Verarbeitung weiter zu Schritt S10 in dem ein Zähler a = n - 1 gesetzt wird. Dann geht die Verarbeitung weiter zu Schritt S11, in dem eine Abfrage stattfindet, ob der Zähler a = 0 ist. Ist die Abfrage in Schritt S11 positiv, wird bestimmt, dass zum Zeitpunkt des Synchronisationszeitpunktes tMAS0 keine Einspritzung aktiv ist, d. h., kein Einspritzventil der Brennkraftmaschine geöffnet ist und die Verarbeitung geht weiter zu Schritt S19 in der Figur 4b. Das "W" in der Verbindung der Schritte S11 und S19 zeigt an, dass das Flussdiagramm von Figur 4a an der Stelle W mit dem Flussdiagramm in Figur 4b verbunden ist.

Ist die Abfrage in Schritt S11 negativ, geht die Verarbeitung weiter zu Schritt S12, in dem der Zähler n auf n = 0 gesetzt wird. Dann geht die Verarbeitung weiter S13, in dem der Zähler n um 1 inkrementiert wird: n = n+1. Dann geht die Verarbeitung weiter zu Schritt S14 in dem das bisher vorhesehene Grund-Einspritzende tigs1 des ersten Zylinders erfasst wird. Das Grund-Einspritzende tigs1 des ersten Zylinders ist das Einspritzende, das für das Einspritzventil des ersten Zylinders in dem Synchrorastervor dem Synchronisationszeitpunkt tMAS0 für ein gleichbleibendes Solldrehmoment der Brennkraftmaschine eingestellt war. Der erste Zylinder ist der Zylinder, bei dem nach dem Synchronisationszeitpunkt tMAS0 als nächstes eine Zündung stattfindet. Dann geht die Verarbeitung weiter zu Schritt S15; in dem eine Abfrage stattfindet, ob das Grund-Einspritzende tigs1 vor dem Synchronisationszeitpunkt tMAS0 liegt. Bei dieser Abfrage wird bestimmt, ob bei einem Zylinder, bei dem in Schritt S9 bestimmt worden ist, dass das Einspritzventil geöffnet ist, die Einspritzung zum Synchronisationszeitpunkt tMAS0 schon geendet hat. Wenn die Einspritzung schon geendet hat, d. h., wenn bei der Abfrage in Schritt S15 bestimmt wird, dass das Grund-Einspritzende tigs 1 vor dem Synchronisationszeitpunkt tMAS0 liegt, geht die Verarbeitung weiter zu Schritt S19 in Figur 4b.

Wird in Schritt S15 festgestellt, dass die Einspritzung bei dem ersten Zylinder noch aktiv und damit verlängerbar ist, d. h., das Grund-Einspritzende tigs1 auf oder nach dem Synchronisationszeitpunkt tMSA0 liegt, geht die Verarbeitung weiter zu Schritt S16, in dem eine erste Verlängerungszeitdauer Δtian berechnet wird. Die erste Verlängerungszeitdauer Δtian berechnet sich nach der folgenden Formel:

$$\Delta tian = \frac{1\,(weemax_n - wee_n)}{(2\Pi \cdot nmot)}$$

"nmot" bezeichnet die Drehzahl der Brennkraftmaschine, "$weemax_n$" bezeichnet einen maximalen Winkel-Einspritz-Ende des Einspritzventils und "$wee_n$" bezeichnet ein Winkel-Einspritz-Ende des Einspritzventils. "$weemax_n$" berechnet sich wie folgt:

$$weemax_n = wes_n - \Delta wflug_n;$$

wobei "$wes_n$" der Winkel-Einlassventil-Schliesst des Einlassventils ist und "$\Delta wflug_n$" die Flugzeit des Kraftstoffes ist, die in Figur 4 mit der Bezugsziffer 33 bezeichnet worden ist. Der Index "n" bezeichnet jeweils den Zähler n, der die entsprechenden Zylinder der Brennkraftmaschine durchzählt.

Dann geht die Verarbeitung weiter zu Schritt S17 in dem das Grundeinspritzende tigs1 um die Verlängerungszeitdauer △tian nach spät, d. h., zeitlich nach hinten verschoben wird. Dann geht die Verarbeitung weiter zu Schritt S18, wie mittels des "X" nach S17 und mit dem "X" vor Schritt 18 in den Figuren 4a und 4b angezeigt ist.

In Schritt S18 in Figur 4b findet eine Abfrage statt, ob der Zähler n = a ist. Wenn die Abfrage in Schritt S18 negativ ist, geht die Verarbeitung zurück zu Schritt S13 in dem der Zähler n um 1 inkrementiert wird: n = n+1. Dann wird in Schritt S14 das Grund-Einspritz-Ende tigs2 des zweiten Zylinders erfasst. Das Grundeinspritzende tigs2 ist das Einspritzende des zweiten Zylinders, das in dem Synchroraster vor dem Synchronisationszeitpunkt tMAS0, an dem der positive Solldrehmomentsprung bestimmt worden ist, fürein gleichbleibendes Solldrehmoment der Brennkraftmaschine für das Einspritzventil des zweiten Zylinders eingestellt war. Der zweite Zylinder ist der Zylinder, bei dem nach dem Synchronisationszeitpunkt tMAS0 nach dem ersten Zylinder die nächste Zündung stattfindet. Dann geht die Verarbeitung weiter zu Schritt S15, in dem eine Abfrage stattfindet, ob das Grund-Einspritzende tigs2 vor dem Synchronisationszeitpunkt tMAS0 liegt. Ist die Abfrage positiv, geht die Verarbeitung weiter zu Schritt S19. Ist die Abfrage negativ, geht die Verarbeitung weiter zu Schritt S16.

In Schritt S16 wird in der gleichen Art und Weise wie bei dem ersten Durchlauf des Schritt S16 die Verlängerungszeitdauer Δtian2 des zweiten Zylinders berechnet. Dann geht die Verarbeitung weiter zu Schritt S17, in dem das Grund-Einspritzende tigs2 des zweiten Zylinders um Δtian2 nach hinten verschoben wird. Dann geht die Verarbeitung weiter zu Schritt S18. In Schritt S18 findet eine Abfrage statt, ob der Zähler n = a ist. Die Schleife der Schritte S13, S14, S15, S16, S17 und S18 wird für alle Zylinder wiederholt, für die in den Schritten S7, S8 und S9 bestimmt worden ist, dass das Einspritzventil vor dem Synchronisationszeitpunkt tMAS0 geöffnet worden ist, und in Schritt S15 festgestellt worden ist, dass das Grund-Einspritzende tigsn dieser Zylinder nicht vor dem Synchronisationszeitpunkt tMAS0 liegt. In anderen Worten werden in der Schleife der Schritte S13, S14, S15, S16, S17 und S18 alle Zylinder erfasst, bei denen ein Einspritzvorgang des Einspritzventils während des Synchronisationszeitpunktes tMAS0, aktiv ist. Die Grundeinspritzzeit der Einspritzventile dieser Zylinder wird durch Verschieben des Grundschliesszeitpunktes tigsn um die Zeitdauer Δtian zeitlich nach später verlängert.

Ist die Abfrage in Schritt S18 positiv, geht die Verarbeitung weiter zu Schritt S 19, in dem der Zähler n = a + 1 gesetzt wird. Dann geht die Verarbeitung weiter zu Schritt S20, in dem ein neuer Einspritzbeginn tiönn für den Zylinder n auf der Grundlage der in Schritt S5 ermittelten Kraftstoff-Ziel-Füllung KFZMSA0 und der entsprechenden Kraftstoff-Ventil-Öffnungszeit tiKFZMSA0 ermittelt wird. Dann geht die Verarbeitung weiter zu Schritt S21. In Schritt S21 wird ermittelt, ob der in Schritt S20 ermittelte neue Einspritzbeginn tiönn des n'ten Zylinders nach oder auf dem Synchronisationszeitpunkt tMAS-1 ist, der vor dem Synchronisationszeitpunkt tMAS0 liegt, und vor dem Synchronisationszeitpunkt tMAS+1 ist, der dem Synchronisationszeitpunkt tMAS0, an dem der positive Solldrehmomentsprung bestimmt worden ist, folgt. In anderen Worten findet in Schritt S21 eine Abfrage statt, ob der neue Einspritzbeginn tiönn des n'ten Zylinders in dem Synchronisationsraster vor dem Synchronisationszeitpunkt tMAS0 oder dem Synchroraster, in dem der positive Solldrehmomentsprung erfasst wird, ist. Ist die Abfrage in Schritt S21 negativ, d. h., liegt der neue Einspritzbeginn tiönn des Zylinders n ausserhalb dieser beiden Synchroraster, geht die Verarbeitung weiter zu Schritt S29. Wird bei der Abfrage in Schritt S21 erfasst, dass der neue Einspritzbeginn tiönn des Zylinders n in dem Synchroraster vor dem Synchronisationszeitpunkt tMAS0 oder in dem Synchroraster des Synchronisationszeitpunktes tMAS0 ist, geht die Verarbeitung weiter zu Schritt S22, in dem eine zweite Verlängerungszeitdauer Δtibn berechnet wird. Die zweite Verlängerungszeitdauer Δtibn wird mittels folgender Formel berechnet:

Δtibn = (Winkel des Grundöffnungszeitpunktes tigön - Winkel des Synchronisationszeitpunktes tMAS+1 vor der Erfassung des Solidrehmomentsprungs + einem Schätzwert Δwes für einen Schliesswinkel eines Einlassventils, der aufgrund weiterer realisierbarer Füllungserhöhungen geschätzt wird)/(2 π nmot).

In Schritt S23 wird in der gleichen Art und Weise wie in Schritt S8 der Grundeinspritzbeginn tigön des Zylinders n erfasst. Dann geht die Verarbeitung weiter zu Schritt S24, in dem die Grundeinspritzzeit tigön des Zylinders n um die zweite Verlängerungszeitdauer Δtibn nach früh verschoben wird. Dann geht die Verarbeitung weiter zu Schritt S25, in dem in der gleichen Art und Weise wie in Schritt S16 die erste Verlängerungszeitdauer Δtian berechnet wird. Dann geht die Verarbeitung weiter zu Schritt S26, in dem in der gleichen Art und Weise wie in Schritt S14 das Grundeinspritzende tigsn des Zylinders n erfasst wird. Dann geht die Verarbeitung weiterzu Schritt S27, in dem das Grundeinspritzende tigsn des Zylinders n um die erste Verlängerungszeitdauer Δtian zeitlich nach hinten verschoben wird.

Dann geht die Verarbeitung weiter zu Schritt S28, in dem der Zähler n um 1 inkrementiert wird: n = n+1. Dann geht die Verarbeitung weiter zu Schritt S20, in dem auf der Grundlage der Kraftstoff Ziel-FÜllung KFZMAS0 bzw. der entsprechenden Einspritzventil-Öffnungszeit tiKFZMAS0 der neue Einspritzbeginn tiönn für den folgenden Zylinder berechnet wird. Dann geht die Verarbeitung weiter zu Schritt S21. Wird bei der Abfrage in Schritt S21 bestimmt, dass der neue Einspritzbeginn tiönn des folgenden Zylinders nach oder auf dem Synchronisationszeitpunkt tMAS-1 und vordem Synchronisationszeitpunkt tMAS+1 ist, werden die Schritte S22 bis S28 und weiter Schritt S20 und S21 in der gleichen Art und Weise, wie oben beschrieben worden ist, für die folgenden Zylinder durchlaufen. Erst wenn die Abfrage in Schritt S21 negativ ist, geht die Verarbeitung weiter zu Schritt S29.

In den Schritten S20 bis S28 wird in anderen Worten ein neuer Einspritzbeginn tiönn für das Einspritzventil des Zylinders n auf der Grundlage der Kraftstoff-Ziel-Füllung KFZMAS0 bestimmt. Dann wird überprüft, ob der neue Einspritzbeginn tiönn nach oder auf dem Synchronisationszeitpunkt tMAS-1 und vor dem Synchronisationszeitpunkt tMAS+1 ist. Dann wird die Grundeinspritzzeit des Einspritzventils dieses Zylinders durch Verschieben des Grundöffnungszeitpunkts tigön des Einspritzventils des entsprechenden Zylinders um die zweite Verlängerungszeitdauer Δtibn nach vorne und durch Verschieben des Grundschliesszeitpunktes tigsn um die erste Verlängerungszeitdauer Δtian nach hinten verlängert, wenn bestimmt wird, dass der neue Öffnungszeitpunkt tiönn nach oder auf dem Synchronisationszeitpunkt tMAS-1 und vor dem Synchronisationszeitpunkt tMAS+1 ist.

In der Schleife mit den Schritten S20 bis Schritt S28 werden solche Einspritzventile von entsprechenden Zylindern angesteuert, deren neuer Einspritzbeginn tiönn für die Kraftstoff-Ziel-Füllung KFZNAS0 in dem Synchro vor oder in dem Synchro des Synchronisationszeitpunktes tMAS0 liegen, verlängert. Bei dieser Verlängerung wird das Grundeinspritzende tigsn der Zylinder n um die erste Verlängerungszeitdauer Δtian nach hinten verschoben und der Grundeinspritzbeginn tigön der Zylinder n um die zweite Verlängerungszeitdauer Δtibn nach vorne verschoben.

In Schritt S29 wird eine dritte Verlängerungszeitdauer Δticn berechnet. Die dritte Verlängerungszeitdauer Δticn berechnet sich wie folgt:

$$\Delta \text{ticn} = \frac{(720^\circ : \text{Zylinderzahl} + \Delta \text{wesn})}{(2\Pi \cdot \text{nmot})};$$

wobei Δwesn der Winkel Einlass Schließt ist, also der Winkel, nachdem kein Kraftstoff mehr in den Brennraum des entsprechenden Zylinders gelangen kann. Über Δwesn wird im Wesentlichen eine Füllungssteuerung realisiert. Bei kleiner Füllung ist Δwesn deutlich früherwie bei einer großen Soll-Füllung. Dementsprechend wird für eine kleine Füllung ein frühes Δwesn verwendet und bei einer großen Füllung ein spätes Δwesn. In der vorliegenden Ausgestaltung wird owesn aufgrund weiterer realistischer Füllungserhöhungen geschätzt und ist zylinderabhängig wählbar.

Dann geht die Verarbeitung weiter zu Schritt S30, in dem in der gleichen Art und Weise wie in Schritt S22 die zweite Verlängerungszeitdauer otibn berechnet wird. Dann geht die Verarbeitung weiter zu Schritt S31, in dem in der gleichen Art und Weise wie in Schritt S16 die erste Verlängerungszeitdauer Δtian berechnet wird. Dann geht die Verarbeitung weiterzu Schritt S32, in dem der Grundeinspritzbeginn tigön des Zylinders n in der gleichen Art und Weise wie in Schritt S8 bestimmt wird. Dann geht die Verarbeitung weiter zu Schritt S33, in dem das Grundeinspritzende tigsn des Zylinders n in der gleichen Art und Weise wie in Schritt S14 ermittelt wird. Dann geht die Verarbeitung, wie mittels des "T" in Figur 4b und Figur 4c angedeutet, weiter zu Schritt S 34, in dem der Grundeinspritzbeginn tigön des Zylinders n um die zweite Verlängerungszeitdauer Δtibn und die dritte Verlängerungszeitdauer Δticn nach vorne auf eine Einspritzventil-Öffnet-Zeitgabe tiön verschoben wird und das Grundeinspritzende tigsn des Zylinders n um die erste Verlängerungszeitdauer Δtian auf eine neue Einspritzventil-Schliesst-Zeitgabe tisn verschoben wird. Damit wird eine Einspritzzeitdauer erreicht, die als Zwischeneinspritzzeitdauer tin bezeichnet wird. Die neue Einspritzventil- Öffnet-Zeitgabe tiön und die neue Einspritzventil-Schliesst-Zeitgabe tisn werden als Einspritzzeitgaben EZn bezeichnet.

In anderen Worten wird in den Schritten S29 bis S34 die Grundeinspritzzeit des Zylinders n der Vielzahl von Zylindern durch Verschieben des Grundöffnungszeitpunkts tigön des Einspritzventils dieses Zylinders um die dritte Verlängerungszeitdauer Δticn und um die zweite Verlängerungszeitdauer Δtibn nach vorne und durch Verschieben des Grundschliesszeitpunkts tigsn um die erste Verlängerungszeitdauer Δtian nach hinten auf eine Zwischeneinspritzzeit verlängert, wenn bestimmt wird, dass der neue Öffnungszeitpunkt tiönn auf oder nach dem Synchronisationszeitpunkt tMAS+1 ist. Dann geht die Verarbeitung weiter zu Schritt S35.

In Schritt S35 findet eine Abfrage statt, ob die Zwischeneinspritzzeitdauer tin grösser oder gleich der in Schritt S5 ermittelten Einspritzventil-Öffnungszeit tiKFZMAS0 ist. Wenn die Abfrage in Schritt S35 ergibt, dass die Zwischeneinspritzzeitdauertin grösser oder gleich der Einspritzventil-Öffnungszeit tiKFZMAS0 ist, geht die Verarbeitung weiter zu Schritt S36, in dem eine Abfrage stattfindet, ob die Zwischeneinspritzzeitdauer tin gleich der in Schritt S5 ermittelten Einspritzventil-Öffnungszeit tiKFZMAS0 ist. Ergibt die Abfrage in Schritt S36, dass die Zwischeneinspritzzeitdauer tin ungleich der Einspritzventil-Öffnungszeit tiKFZMAS0 ist, gehtdie Verarbeitung weiter zu Schritt S37. Wenn die Abfrage in Schritt S36 positiv ist, geht die Verarbeitung direkt weiter zu Schritt S39.

In Schritt S37 wird die neue Einspritzventil-S chliesst-Zeitgabe tisn gleich der neuen Einspritzventil-Öffnet-Zeitgabe tiön gesetzt, die um die Einspritzventil-Öffnungszeit tiKFZMAS0 zeitlich nach spät verschoben wird.

Dann geht die Verarbeitung weiter zu Schritt S38, in dem die Einspritzzeitgaben für den Zylinder n EZn auf die Einspritzventil-Öffnet-Zeitgabe tiön und die Einspritzventil-Schliesst-Zeitgabe tisn, die in Schritt S38 berechnet worden ist, festgelegt wird. Dann geht die Verarbeitung weiter zu Schritt S39.

In Schritt S39 findet eine Abfrage statt, ob eine gewünschte Vorlagerung der Einspritzung bei dem Zylinder n erreicht ist. Hierzu wird geprüft, ob ein Einlassventil-Öffnet-Zeitpunkt tEÖn des Zylinders n abzüglich der in Schritt S37 ermittelten Einspritzventil-Schliesst-Zeitgabe tisn grösser oder gleich der Zeitdauer V der gewünschten Vorlagerung ist. Wenn in Schritt S39 ermittelt wird, dass die gewünschte Vorlagerung erreicht ist, geht die Verarbeitung weiter zu Schritt S49. Wenn in Schritt S39 ermittelt wird, dass die gewünschte Vorlagerung noch nicht erreicht ist, geht die Verarbeitung weiter zu Schritt S40. Wenn in Schritt S35 ermittelt worden ist, dass die Zwischeneinspritzzeitdauertin nicht grösser oder gleich der Einspritzventil-Öffnungszeit tiKFZMAS0 ist, geht die Verarbeitung weiter zu Schritt S40.

In Schritt S40 wird der Zähler n um 1 inkrementiert: n = n+1. Dann geht die Verarbeitung weiter zu Schritt S41.

In Schritt S41 wird die dritte Verlängerungszeitdauer Δticn in dergleichen Art und Weise wie in Schritt S29 ermittelt. Dann geht die Verarbeitung weiter zu Schritt S42, in dem Einspritzzeitgaben EZn für den Zylinder n festgelegt werden. Die Einspritzventil-Öffnet-Zeitgabe tiön für den Zylinder n wird dergestalt festgelegt, dass das Grundeinspritzende tigsn des Zylinders n zuerst um die erste Verlängerungszeitdauer Δtian zeitlich nach spät verschoben wird und dieser Wert dann um die Zwischeneinspritzzeitdauer tin-1 des Zylinders zeitlich nach vorne (nach früh) verschoben wird und dieser Wert dann noch um die dr-itte Verlängerungszeitdauer Δticn nach vorne verschoben wird. Somit ergeben sich die Einspritzzeitgaben EZn für den Zylinder n wie folgt:

$$\mathrm{EZn} = \left[\left(\mathrm{tigsn} + \Delta\mathrm{tian}\right) - tin_{-1} - \Delta ticn; tigsn + \Delta tian\right].$$

Die Einspritzventil-Schliesst-Zeitgabe tisn wird dergestalt ermittelt, dass das Grundeinspritzende tigsn des Zylinders n um die erste Verlängerungszeitdauer Δtian nach hinten verschoben wird. Dann geht die Verarbeitung weiter zu Schritt S43.

In Schritt S43 wird die Zwischeneinspritzzeitdauer tin wie folgt neu ermittelt: zuerst wird das Grundeinspritzende tigsn des Zylinders n um die erste Verlängerungszeitdauer Δtian zeitlich nach hinten verschoben. Dieser Wert wird dann um die Zwischeneinspritzdauer tin-1 des vorhergehenden Zylinders n-1 zeitlich nach vorne verschoben. Dieser Wert wird wiederum um die dritte Verlängerungszeitdauer Δticn nach vorne verschoben. Um diese ermittelte Zeitdauer wird dann das Grundeinspritzende tigsn des Zylinders n, das um die erste Verlängerungszeitdauer Δtian zeitlich nach hinten verschoben worden ist, nach vorne verschoben. Somit ergibt sich für tin:

$$\mathrm{tin} = \left(\mathrm{tigsn} + \Delta\,\mathrm{tian}\right) - \left(\left(tigsn + \Delta\,tian\right) - tin_{-1} - \Delta\,tian\right).$$

Dann geht die Verarbeitung-weiter zu Schritt S44, in dem eine Abfrage stattfindet, ob die Zwischeneinspritzzeitdauer tin grösser oder gleich der in Schritt S5 ermittelten Einspritzventil-Öffnungszeitdauer tiKFZMAS0 ist. Wenn die Abfrage in Schritt S44 negativ ist, geht die Verarbeitung zurück zu Schritt S40. Wenn die Abfrage in Schritt S44 positiv ist, geht die Verarbeitung weiter zu Schritt S45, in dem eine Abfrage stattfindet, ob die Zwischeneinspritzzeitdauer tin gleich der in Schritt S5 ermittelten Einspritzventil-ÖfiFnungszeittiKFZfViAS0 ist. Wenn die Abfrage in SchrittS45 negativ ist, geht die Verarbeitung weiter zu Schritt S46; bei positiver Abfrage geht die Verarbeitung weiter zu Schritt S48.

In Schritt S46 wird die Einspritzventil-Schliesst-Zeitgabe des Zylinders n dergestalt berechnet, dass die Einspritzventil-Öffnet-Zeitgabe tiön, die in Schritt S34 ermittelt worden ist um die Einspritzventil-Öffnungszeit tiKFZMASO, die in Schritt S5 ermittelt worden ist, zeitlich nach hinten (nach spät) verschoben wird. Dann geht die Verarbeitung weiter zu Schritt S47, in dem die Einspritzzeitgaben EZn des Zylinders n dergestaltfestgelegtwerden, dass als Einspritz-Öffnet-Zeitgabetiön die Einspritzventil-Öffnet-Zeitgabe tiön, die in Schritt S34 ermittelt worden ist, übernommen wird und als Einspritzventil-Schliesst-Zeitgabe tisn, die in Schritt S46 ermitteltete Einspritzventil-Schliesst-Zeitgabe tisn verwendet wird. Dann geht die Verarbeitung weiter zu Schritt S48.

In Schritt S48 wird in der gleichen Art und Weise wie in Schritt S39 ermittelt, ob die gewünschte Vorlagerung erreicht ist oder nicht. Wenn in Schritt S48 ermittelt wird, dass die gewünschte Vorlage erreicht ist, geht die Verarbeitung weiter zu Schritt S49.

In anderen Worten wird in den Schritten S40 bis S48 bei den Zylindern n solange eine Einspritzzeit gleich der Zwischeneinspritzzeitdes jeweils vorhergehenden Zylinders n-1 angewendet, die jeweils um die dritte Verlängerungszeitdauer Δticn verkürzt wird, bis die gewünschte Vorlagerung V erreicht wird, wobei jeweils nach Erreichen der Zieleinspritzzeit tiKFZMAS0 - wenn die um die dritte Verlängerungszeitdauer Δticn verlängerte Zwischeneinspritzzeit des jeweils vorhergehenden Zylinders n-1 länger als die Zieleinspritzzeit tiKFZMAS0 ist - das Einspritzventil geschlossen wird. Ergibt die Abfrage in Schritt S48, dass die gewünschte Vorlagerung noch nicht erreicht ist, geht die Verarbeitung zurück zu Schritt S40.

in Schritt S49 wird ein Zähler w auf 0 zurückgesetzt: w = 0. Dann geht die Verarbeitung weiter zu Schritt S50, in dem der Zähler w um 1 inkrementiert wird: w = w+1. Dann geht die Verarbeitung weiter zu Schritt S51, in dem eine Soll-Füllung rksollAW für den Zylinder w ermittelt wird. Die Ermittlung der Soll-Füllung rksollAW wird im folgenden mit Verweis auf die Figuren 8 und 9 weiter beschrieben. Dann geht die Verarbeitung weiter zu Schritt S52, in dem die Soll-Füllung rksollAW an das Motorsteuergerät zur variablen Steuerung der Einlass- und Auslassventile ausgibt. Ferner werden in Schritt S52 die oben ermittelten Ansteuerzeiten für das Einspritzventil des Zylinders w ausgegeben. Dann geht die Verarbeitung weiter zu Schritt S53, in dem eine Abfrage stattfindet, ob der Zähler w den Stand n erreicht hat. Wenn die Abfrage in Schritt S53 ergibt, dass der Zähler w kleiner als n ist, geht die Verarbeitung zurück zu Schritt S50. Die Schritte S50 bis S53 werden dann für den folgenden Zylinder durchlaufen. Wenn die Abfrage in Schritt S53 ergibt, dass der Zähler w den Stand n erreicht hat, geht die Verarbeitung weiter zu Schritt S54 in einen Normalbetrieb, in dem das Motorsteuergerät die Einspritzventile der Zylinder mit dem Grund-Einspritzbeginn tigön und dem Grund-Einspritzende tigsn ansteuert. Nach Schritt S54 geht die Verarbeitung weiter zu Schritt S55, in dem die Verarbeitung endet.

Wenn in dem oben beschriebenen Verfahren nureine Einspritzventil-Schliesst-Zeitgabe eines Zylinders verändert wird, verwendet das Motorsteuergerät den entsprechenden Grund-Einspritzbeginn tigön des Zylinders n. Ebenso verwendet des Motorsteuergerät das entsprechende Grund-Einspritzende tigsn des Zylinders n, wenn nur die Einspritzventil-Öffnet-Zeitgabe des Einspritzventils eines Zylinders verändert wird.

Wenn die Abfrage in Schritt S4 negativ ist, geht die Verarbeitung weiter zu Schritt S56, in dem erfasst wird, ob Solldrehmomentwerte von aufeinanderfolgenden Synchronisationszeitpunkten gleich sind. Wenn die Abfrage in Schritt S56 positiv ist, liegt kein Solldrehmomentsprung vor und die Verarbeitung geht zurück zu Schritt S2. Wenn die Abfrage in Schritt S56 ergibt, dass die zwei Solldrehmomentwerte von aufeinanderfolgenden Synchronisationszeitpunkten ungleich sind, wird bestimmt, dass ein negativer Solldrehmomentsprung, d. h., eine Verringerung des Solldrehmoments der Brennkraftmaschine erfasst wird. Dann geht die Verarbeitung weiter zu Schritt S57 in Figur 4d, wie mittels des "B" in den Figuren 4a und 4d angedeutet ist.

In Schritt S57 erfasst das Motorsteuergerät Ansteuersignale des Einspritzventils. Dann geht die Verarbeitung weiter zu Schritt S58, in dem eine Abfrage stattfindet, ob während des Synchronisationszeitpunktes tMBS0 ein Einspritzventil geöffnet ist, d. h., eine Einspritzung bei einem Zylinder aktiv ist. Dies wird durch Erfassen von Ansteuersignaten der Einspritzventile der Brennkraftmaschine ausgeführt. Der Synchronisationszeitpunkt tMBS0 ist der Synchronisationszeitpunkt, an dem der negative Lastsprung bestimmt wird. In den Schritten S57 und S58 wird in der gleichen Art und Weise wie in den Schritten S7 bis S15 erfasst, ob bei einem Synchronisationszeitpunkt, bei dem ein negativer Solldrehmomentsprung bestimmt wird, eine Einspritzung oder mehrere Einspritzungen bei den Zylindern der Brennkraftmaschine aktiv ist. Das in den Schritten S57 und S58 beschriebene Verfahren ist eine Alternative zu dem in den Schritten S7 bis S15 beschriebenen Verfahren und beide Verfahren sind jeweils austauschbar.

Ist die Abfrage in Schritt S58 negativ, geht die Verarbeitung weiter zu Schritt S75, wie mittels "C" in der Figur 4d und 4e angegeben ist. Wenn bei der Abfrage in Schritt S58 bestimmt wird, dass eine Einspritzung während des Synchronisationszeitpunktes tMBS0 aktiv ist, geht die Verarbeitung weiter zu Schritt S59, in dem die Anzahl a der Einspritzungen erfasst wird, die während des Synchronisationszeitpunktes tMBS0 aktiv sind. Dann geht die Verarbeitung weiter zu Schritt S60, in dem ähnlich wie in Schritt S5 eine Kraftstoff-Ziel-Füllung KFZMSB0 für das nun verringerte Solldrehmoment bestimmt wird und damit - da die Einspritzdauer des Einspritzventils proportional zu der eingespritzten Kraftstoffmenge ist - eine Einspritzventil-Öffnungszeit tiKFZMSB0 bestimmt wird. Diese Ermittlung wird mit Verweis auf Figur 12 weiter beschrieben werden. Dann geht die Verarbeitung weiter zu Schritt S61, in dem der Zähler n auf 0 zurückgesetzt wird: n = 0. Dann geht die Verarbeitung weiter zu Schritt S62, in dem der Zähler um 1 inkrementiert wird: n = n+1. Dann geht die Verarbeitung weiter zu Schritt S63, in dem eine Zeitdauer tian ermittelt wird, die das Einspritzventil des Zylinders n bei dem Synchronisationszeitpunkt tMBS0 schon offen war. Diese Zeitdauertian entspricht der zum Synchronisationszeitpunkt tMBS0 schon in das Saugrohr des Zylinders n eingespritzten Kraftstoffmenge. Die Zeitdauertian berechnet sich durch Subtraktion des Grund-Einspritzbeginns tigön des Zylinders n von dem Zeitpunkt des Synchronisationszeitpunktes tMBS0. Dann geht die Verarbeitung weiter zu Schritt S64, in dem eine Abfrage stattfindet, ob der Zähler n = 1 ist. Wenn die Abfrage in Schritt S64 positiv ist, wird in Schritt S65 eine erste Verkürzungszeitdauer Δtik1 wie folgt berechnet:

$$\Delta tik1 = -1 \frac{(wEE1 - wtMBS0)}{(2\Pi \cdot nmot)};$$

wobei "wEE1" der Winkel-Einlassventil-Schliesst des ersten Zylinders ist und "wtMBS0" der Winkel des Synchronisationszeitpunktes tMBS0 ist. Dann geht die Verarbeitung weiter zu Schritt S66, in dem eine Einspritzventil-Schliesst-Zeitgabe tis1 für den ersten Zylinder berechnet wird, in dem das Grund-Einspritzende tigs 1 des ersten Zylinders um die erste Verkürzungszeitdauer Δtik1 dem Schritt.S65 berechnet worden ist, nach vorne verschoben wird. Dann geht die Verarbeitung weiter zu Schritt S67, in dem Einspritzzeitgaben EZ1 für den ersten Zylinder dergestalt festgelegt werden, dass als Einspritzventil-ÖfFnet-Zeitgabeüö1 der Grund-Einspritzbeginn tigö 1 verwendet wird und als Zeitgabeeinspritzventil-Schliesst die in Schritt S66 berechnete Zeitgabe tis1. Dann geht die Verarbeitung weiter zu Schritt S68.

Ergibt die Abfrage in Schritt S64, dass der Zähler n ungleich 1 ist, geht die Verarbeitung weiter zu Schritt S69, in dem eine zweite Verkürzungszeitdauer Δtikn wie folgt berechnet wird:

$$\Delta tikn = -\frac{1}{(2\Pi \cdot nmot)} \frac{720°}{(\text{Anzahl der Zylinder der Brennkraftmaschine})}.$$

Dann geht die Verarbeitung weiter zu Schritt S68. In Schritt S68 findet eine Abfrage statt, ob eine Zeitdauer von dem Grund-Einspritzbeginn tigön des Zylinders n bis zu dem Grund-Einspritzende tigsn des Zylinders n, das je nach Stand des Zählers n um die erste Verkürzungszeitdauer Δtik1 oder die zweite Verkürzungszeitdauer Δtikn nach vorne verschoben worden ist, grösser als die Einspritzventil-Öffnungszeit tiKFZMSA0 ist. Wenn die Abfrage in Schritt S68 positiv ist, geht die Verarbeitung weiter zu Schritt S69, in dem Einspritzzeitgaben EZn für den Zylinder n dergestalt festgelegt werden, dass die Einspritzventil-Öffnet-Zeitgabe tiön gleich dem Grund-Einspritzbeginn tigön ist und die Einspritzzeitgabe tisn für das Einspritzventil-Schliesst auf das Grund-Einspritzende tigsn gesetzt wird, das je nach Stand des Zählers n um die erste Verkürzungszeitdauer Δtik1 oder die zweite Verkürzungszeitdauer Δtikn nach vorne verschoben worden ist. Dann geht die Verarbeitung weiter zu Schritt S70, in dem eine Abfrage stattfindet, ob der Zähler n = a ist. Wenn die Abfrage in Schritt S70 negativ ist, geht die Verarbeitung zurück zu Schritt S62. Wenn die Abfrage in Schritt S70 positiv ist, geht die Verarbeitung weiter zu Schritt S73.

Wenn die Abfrage in Schritt S68 negativ ist, geht die Verarbeitung weiter zu Schritt S72, in dem Einspritzzeitgaben EZn des Zylinders dergestalt festgelegt werden, dass als Einspritzventil-Öffnet-Zeitgabe tiön der Grund-Einspritzbeginn tigön des Zylinders n verwendet wird und als Einspritzventil-Schliesst-Zeitgabetisn derGrundeinspritzbeginn tigön des Zylinders n, der um die Einspritzventil-Öffnungszeit tiKFZMAS0 zeitlich nach hinten verschoben wird. Dann geht die Verarbeitung weiter zu Schritt S71; in dem eine Abfrage stattfindet, ob eine gewünschte Vorlagerung V erreicht ist. Hierzu wird die ermittelten Einspritzventil-Schliesst-Zeitgabe tisn des entsprechenden Zylinders n von dem Zeitpunkt tEÖn, an dem das Einlassventil des Zylinders n geöffnet wird, subtrahiert. Ist das Subtraktionsergebnis grösser oder gleich Null, ist die gewünschte Vorlagerung V erreicht. Die Abfrage in Schritt S71 entspricht der Abfrage in Schritt S39. Ergibt die Abfrage in Schritt S71 das die gewünschte Vorlagerung V erreicht ist, geht die Verarbeitung zu Schritt S75 in Figur 4e wie mittels des "C" in den Figuren 4d und 4e angegeben ist.

Ergibt die Abfrage in Schritt S71, dass die gewünschte Vorlagerung V nicht erreicht ist, geht die Verarbeitung weiter zu Schritt S73, in dem der Zähler n um 1 inkrementiert wird: n = n+1. Dann geht die Verarbeitung weiter zu Schritt S74, in dem Einspritzzeitgaben EZn des Zylinders n dergestalt festgelegt werden, dass als Einspritzventil-Öffnet-Zeitgabe tiön der Grund-Einspritzbeginn tigön des Zylinders n verwendet wird und als Einspritzventil-Schfiesst-Zeiigabetisn der Grund-Einspritzbeginn tigön, der um die Einspritzventil-Öffnungszeit tiKFZMBS0 zeitlich nach hinten verschoben wird. Dann geht die Verarbeitung weiter zu Schritt S71.

In Schritt S75 in Figur 4e wird ein Zähler w auf 0 zurückgesetzt: w = 0. Dann geht die Verarbeitung weiter zu Schritt S76, in dem der Zähler w in 1 inkrementiert wird w = w+1.

Dann geht die Verarbeitung weiter zu Schritt S77, in dem eine Soll-Füllung rksollBW für den Zylinder w berechnet wird. Diese Berechnung wird mit Verweis auf Figur 12 weiter beschrieben. Dann geht die Verarbeitung weiter zu Schritt S78, in dem die Soll-Füllung rksollBW an das Motorsteuergerät zur variablen Ventilsteuerung ausgegeben wird und die Ansteuerzeiten für das Einspritzventil des Zylinders w an das Motorsteuergerät ausgegeben werden, so dass das Motorsteuergerät entsprechende Ansteuersignale an das Einspritzventil des Zylinders w ausgeben kann. Dann geht die Verarbeitung weiter zu Schritt S79, in dem eine Abfrage stattfindet, ob der Zähler w den Zählwert n erreicht hat. Wenn in Schritt S79 der Zähler w ungleich dem Wert n ist, geht die Verarbeitung zurück zu Schritt S76 und die Schritte S76 bis S79 werden für den folgenden Zylinder durchlaufen. Ergibt die Abfrage in Schritt S79, dass der Zähler w = n ist, geht die Verarbeitung weiter zu Schritt S80, in dem das Motorsteuergerät wie in Schritt S54 in den Normalbetrieb übergeht. Dann geht die Verarbeitung weiter zu Schritt S81, in dem die Verarbeitung endet.

Das mit Verweis auf die Figuren 4a bis 4e beschriebene Verfahren wird zyklisch während des Betriebs der Brennkraftmaschine ausgeführt.

Zusammenfassend führt das oben beschriebene Verfahren nach Erfassung des negativen Solldrehmomentsprungs folgende Schritte aus. Es wird erfasst, ob ein Einspritzvorgang eines Einspritzventils der Vielzahl von Zylindern der Brennkraftmaschine während des Synchronisationszeitpunktes tMBS0 aktiv ist und bei diesem aktiven Einspritzvorgang wird die Grundeinspritzzeit des Einspritzventils dieses Zylinders durch Verschieben des Grund-Einspritzendes, tigsn um die Zeitdauer Δtidn nach vorne verkürzt. Die Zeitdauer Δtidn wird auf der Grundlage einer Drehzahl nmot der Brennkraftmaschine, einem Schliesswinkel des Einlassventils und einem Winkel des Synchronisationszeitpunktes tMBS0 ermittelt. Dann wird die Einspritzventil-Öffnungszeit tiKFZMBS0 auf der Grundlage des Solldrehmomentwerts MBS0 zum Synchronisationszeitpunkt tMBS0 das jeweilige Grund-Einspritzende tigsn bei den folgenden Zylindern jeweils um eine Zeitdauer Δtien nach vorne verschoben bis die Einspritzventil-Öffnungszeit tiKFZMBS0 erreicht wird. Dabei wird der jeweilige Grundeinspritzbeginn tigön des Zylinders beibehalten. Wenn die Einspritzventil-Öffnungszeit tiKFZMSB0 erreicht wird, wird solange als Einspritzzeitvorgabe der jeweilige Grund-Einspritzbeginn tigön als Öffnungszeitpunkt des jeweiligen Einspritzventils und als Schliesszeitpunkt des jeweiligen Einspritzventils eine Summe aus dem jeweiligen Grund-Einspritzbeginn tigön und der Einspritzventil-Öffnungszeit tiKFZMBS0 beibehalten, bis die gewünschte Vorlagerung erreicht wird. Die Zeitdauer Δtien wird aufder Grundlage der Drehzahl nmot der Brennkraftmaschine in einer Anzahl der Zylinder der Brennkraftmaschine ermittelt. Es wird ferner eine Kraftstoff-Ziel-Füllung KFZMBS0 auf der Grundlage des Soll.drehmoments MBS0 zum Synchronisationszeitpunkt tMBS0, eines gewünschten Zündwinkelwiiku ngsg rades und eines Soll-Lambda-Wirkungsgrades berechnet. Fernerwird eine realisierbare Kraftstoff-Füllung für jeden der Zylinder, bei dem eine Einspritzventil-Zeitgabe verändert worden ist, entsprechend den veränderten Einspritzzeitgaben berechnet. Damit wird ein Vergleich zwischen der Kraftstoff-Ziel-Füllung KFZMBS0 und der jeweiligen realisierbaren Kraftstoff-Füllung der jeweiligen Zylinder ausgeführt und es wird die grössere Kraftstoffmenge der Kraftstoff-Ziel-Füllung KFZMBS0 und der realisierbaren Kraftstoff-Füllung des jeweiligen Zylinders an ein Steuergerät einer variablen Ventilsteuerung als Soll-Füllung rksolln dieser Zylinder ausgegeben.

Im folgenden wird nun mit Verweis auf die Figuren 5 bis 12 die Wirkungsweise des mit Verweis auf die Figuren 4a bis 4e beschriebenen Verfahrens weiter erläutert. Figur 5 zeigt ein Diagramm anhand dessen, eine Reaktion auf einen positiven Solldrehmomentsprung einer Vierzylinderbrennkraftmaschine mit einer Zündfolge von 1-2-4-3, erläutert wird. Die Brennkraftmaschine wird gemäss dem Verfahren betrieben, das anhand der Figuren 4a bis 4e beschrieben worden ist. Entlang der Abszisse des Diagramms von Figur 5 ist der Kurbelwinkel $\alpha$ in °KW angetragen und entlang der Ordinate des Diagramms von Figur 5 ist mit der Bezugsziffer 40 ein Ist-Drehmoment der Brennkraftmaschine angetragen.

Die Bezugsziffer 42 bezeichnet einen Verlauf einer Ventilerhebungskurve eines Einlassventils über dem Kurbelwinkel α. Die Bezugsziffer 43 bezeichnet eine Ventilerhebungskurve eines Auslassventils über dem Kurbelwinkel α. Die Bezugsziffer 44 bezeichnet einen Verlauf eines Ansteuersignals eines Einspritzventils über dem Verlauf des Kurbelwinkels α. Die Bezugsziffer 45 bezeichnet einen Zündzeitpunkt bei dem dritten Zylinder. Die Ventilerhebungskurve 42, die Ventilerhebungskurve 43, der Verlauf des Ansteuersignals 44 und die Zündzeitpunkte 45 betreffen den dritten Zylinder der Brennkraftmaschine.

Die Bezugsziffer 46 bezeichnet eine Ventilerhebungskurve eines Einlassventils des vierten Zylinders über dem Kurbelwinkel α. Die Bezugsziffer 47 bezeichnet eine Ventilerhebungskurve eines Auslassventils des vierten Zylinders der Brennkraftmaschine über dem Kurbelwinkel α. Die Bezugsziffer 48 bezeichnet einen Verlauf eines Ansteuersignals des Einspritzventils des vierten Zylinders über dem Kurbelwinkel α. Die Bezugsziffer 49 bezeichnet einen Zündzeitpunkt bei dem vierten Zylinder.

Die Bezugsziffer 50 bezeichnet eine Ventilerhebungskurve eines Einlassventils des zweiten Zylinders der Brennkraftmaschine über dem Kurbelwinkel α. Die Bezugsziffer 51 bezeichnet den Verlauf einer Ventilerhebungskurve eines Auslassventils des zweiten Zylinders der Brennkraftmaschine über dem Kurbelwinkel α. Die Bezugsziffer 52 bezeichnet einen Verlauf eines Ansteuersignals eines Einspritzventils des zweiten Zylinders über dem Kurbelwinkel α. Die Bezugsziffer 53 bezeichnet einen Zündzeitpunkt bei dem zweiten Zylinder der Brennkraftmaschine.

Die Bezugsziffer 54 bezeichnet einen Verlauf einer Ventilerhebungskurve von einem Einlassventil des ersten Zylinders der Brennkraftmaschine über dem Kurbelwinkel α. Die Bezugsziffer 55 bezeichnet einen Verlauf einer Ventilerhebungskurve eines Auslassventils des ersten Zylinders der Brennkraftmaschine über dem Kurbelwinkel α. Die Bezugsziffer 56 bezeichnet einen Verlaufdes Ansteuersignals eines Einspritzventils des ersten Zylinders der Brennkraftmaschine über dem Kurbelwinkel α. Die Bezugsziffer 57 bezeichnet einen Zündzeitpunkt bei dem ersten Zylinder der Brennkraftmaschine. Die Bezugsziffern 58 bezeichnen Synchronisationszeitpunkte.

Der Figur 5 ist zu entnehmen, dass zu dem ersten Synchronisationszeitpunkt 58, der mit tMAS-1 bezeichnet ist, das Solldrehmoment der Brennkraftmaschine einen Wert aufweist, der geringer ist als bei dem folgenden Synchronisationszeitpunkt 58, der mit tMAS0 bezeichnet ist. Zu dem Synchronisationszeitpunkt tMAS0 wird dementsprechend der positive Soll-Drehmomentsprung der Brennkraftmaschine erfasst. Daraufhin wird das Ansteuersignal 52 des Einspritzventils des zweiten Zylinders, das zu dem Synchronisationszeitpunkt tMAS0 aktiv ist, um die erste Verlängerungszeitdauer verlängert. Dies wird nun mit Verweis auf Figur 6 weiter beschrieben.

Figur 6 zeigt ein Ablaufdiagramm über dem Kurbelwinkel α in °KW der Brennkraftmaschine. "wee" gibt den Winkel des Grund-Einspritzendes tigön an. "weemax" gibt die un die Flugzeit Δwftug korrigierte, maximale Verlängerung der Einspritzung an. "wes" gibt den Winkel Einlassventil-Schliesst an und "OT" gibt den oberen Totpunkt des Zylinders an. Die maximale Verlängerung, nämlich der Abstand zwischen wee und weemax ist die erste Verlängerungszeitdauer, die in Schritt S16, S25 und S31 berechnet wird. Wenn wes selbst variabel ist, ist bei der Berechnung der ersten Verlängerungszeitdauer Δtian ein Schätzwert von wes zu ermitteln, der vorzugsweise auf der Grundlage des Winkel-Einlass-Schliesst des vorhergehenden Zylinders ermittelt wird.

Dies wird nun mit Verweis auf Figur 7 die Situation bei dem zweiten Zylinder bei den Zeitpunkten tMAS-1 und tMAS0 weiter beschrieben. Figur 7 zeigt eine Möglichkeit zur Erhöhung der Einspritzmenge bei nachfolgenden Zylindern n, deren neuer Einspritzbeginn tiönn, der auf der Grundlage der Kraftstoff-Ziel-Füllung KFZMAS0 ermittelt worden ist, vor dem Synchronisationszeitpunkt tMAS0 beginnt. Figur 7 zeigt ein Diagramm, das einen Ablauf eines Ansteuersignals 60 eines Einspritzventils eines Zylinders n über dem Kurbelwinkel α in °KW zeigt. "weemax" gibt die um die Flugzeit Δwflug korrigierte, maximale Verlängerung der Einspritzung an. "wes" gibt den Winkel Einlassventil-Schliesst an und "OT" gibt den oberen Totpunkt des Zylinders an."wtiönn" gibt einen Winkel des neuen Einspritzbeginns tiönn an, der in Schritt S20 berechnet worden ist. Wie Figur 7 zu entnehmen ist, ist wtiönn vor dem Synchronisationszeitpunkt wtMAS0, in dem der positive Lastsprung erfasst wird. Das Ansteuersignal 60 kann maximal, wie mit Verweis auf Figur 6 beschrieben worden ist, nach hinten bis zum Zeitpunkt weemax verlängert werden. Die Bezugsziffer 61 gibt die maximale Verlängerung des Ansteuersignals 60 nach vorne an. Die maximale Verlängerung geht bis zu dem Zeitpunkt wtMAS-1. Bei dieser Art von Verlängerung wird davon ausgegangen, dass noch in dem Synchro des Synchronisationszeitpunktes tMAS0 die Einspritzventile der Zylinder sofort angesteuert werden.

Der Figur 5 ist zu entnehmen, dass das Ansteuersignal 48 des Einspritzventils des vierten Zylinders sowohl um die erste Verlängerungszeitdaüer Δtian nach hinten verlängert wird als auch um die zweite Verlängerungszeitdauer Δtibn nach vorne verlängert, so dass das Ansteuersignal 48 zum Zeitpunkt tMAS0 beginnt. Bei dem folgenden, dritten Zylinder der Brennkraftmaschine lässt sich folgende, weitere Einspritzmengenerhöhung realisieren. Das Ansteuersignal 44 des Einspritzventils des dritten Zylinders wird um die erste Verlängerungszeitdauer Δtian von dem Grund-Einspritzende tigsn nach hinten verschoben. Ferner wird der Grund-Einspritzbeginn tigön um die zweite Verlängerungszeitdauer Δtibn und um eine dritte Verlängerungszeitdauer Δticn nach vorne verschoben. Die dritte Verlängerungszeitdauer Δticn berechnet sich, wie in Schritt S29 angegeben. Im vorliegenden Fall ist es jedoch bei dem dritten Zylinder nicht mehr erforderlich, die gesamten Verlängerungsmöglichkeiten auszuschöpfen, da die möglichen Verlängerungen zu einer zu langen Anspritzdauer führen würden. Dementsprechend wird bei dem dritten Zylinder die volle Verlängerung nicht mehr ausgeschöpft sondern das Einspritzventil des dritten Zylinders nach der Einspritzventil-Öffnungszeit tiKFZMAS0 geschlossen. Obwohl die Füllung bei dem dritten Zylinder das erste Mal die Kraftstoff-Ziel-Füllung KFZMAS0 annehmen kann, wird trotzdem noch in das offene Einspritzventil (siehe Ventilerhebungskurve 42) gespritzt, was zu vermeiden ist. Dementsprechend wird bei dem folgenden ersten Zylinder der Einspritzbegin n von dem Grundeinspritzbeginn tigön um die zweite Verlängerungszeitdauer Δtibn, um die dritte Verlängerungszeitdauer Δticn und um eine weitere Verlängerungszeitdauer Δtiun verlängert, die in der gleichen Art und Weise wie die dritte Verlängerungszeitdauer Δticn berechnet wird. Das Einspritzventil wird dann nach der Einspritzventil-Öffnungszeit tiKFZMSA0 geschlossen. Auf diese Weise wird dann bei dem ersten Zylinder das erste Mal die Kraftstoff-Ziel-Füllung KFZMSA0 und die gewünschte Vorgabe bezüglich eines Öffnungszeitpunktes des Einlassventils dieses Zylinders erzielt, der mittels der Ventilerhebungskurve 64 dargestellt ist.

Auf diese Weise wird der Ist-Drehmomentverlauf 40 erzielt, in dem ein stufenförmiger Anstieg des Ist-Drehmoments der Brennkraftmaschine erzielt wird bis in dem fünften Synchroraster nach Erfassen des positiven Solldrehmomentsprungs das Ist-Drehmoment gleich dem Solldrehmoment wird.

Figur 8 zeigt ein Diagramm, das die Berechnung des Wunschwertes des Kraftstoffanteils rkwunsch aus dem zu erzielenden Soll-Drehmoment misoll unter Berücksichtigung des gewünschten Zündwinkeiwirkungsgrades etazwsoll und des Lambdawirkungsgrades etalamsoll berechnetwird. Die Berechnung der Wunschfüllung des Zylinders mit Frischluft zur Realisierung des Soll-Drehmoments aus dem zu erzielenden Soll-Drehmoment misoll, der Drehzahl der Brennkraftmaschine nmot, dem Lambdawirkungsgrad etalamsoll und dem Zündwinkelwirkungsgrad etazwsoll ist bekannt und wird in der Bosch-Motorsteuerung ME7 ausgeführt. Die, ermittelte Wunschfüllung riwunsch des Zylinders mit Frischluft zur Realisierung des Solldrehmoments wird mit einem Lambda-Sollwert lambdasoll im Brennraum des entsprechenden Zylinders der Brennkraftmaschine verrechnet. Diese Verrechnung ergibt den Wunschwert des Kraftstoffanteils rkwunsch.

Im folgenden wird für jeden Zylinder bei dem die Grundeinspritzzeit verändert worden ist, ein maximal realisierbarer Kraftstoffanteil rkmaxreal berechnet,. Hierzu wird auf der Grundlage der in dem oben beschriebenen Verfahren ermittelten Einspritzzeitgaben die jeweilige Einspritzzeit tin für den Zylinder n berechnet. Aus tin lässt sich der maximal realisierbare Kraftstoffanteil rkmaxreal durch Multiplikation mit einer vorgegebenen Umrechnungskonstanten K_HUB_ EV berechnen. Von dem Wunschwert des Kraftstoffanteils rkwunsch und dem maximal realisierbaren Kraftstoffanteil des Zylinders n wird dann für jeden Zylinder n der kleinere Wert ermittelt. Dies ist in Figur 9 dargestellt. Figur 9 zeigt eine Minimumermittlungseinrichtung 70, die aus den Eingangswerten rkwunsch und rkmaxreal den kleineren Wert ermittelt und diesen kleineren Wert als rksoll ausgibt. Aus rksoll kann nun mittels folgender Formel die vorgebbare Frischluft-Füllung rlsoll des-entsprechenden Zylinders n berechnet werden:

$$\text{rlsoll} = \text{rksoll} \cdot \text{lambdasoll} \ .$$

Auf diese Weise wird gemäss dervorliegenden Erfindung sichergestellt, dass bei einem positiven Soll-Drehmomentsprung ein vorgegebenes Lambda im Brennraum des Zylinders eingehalten wird, und dass die Änderung des Solldrehmoments möglichst schnell nachgebildet wird.

Vorzugsweise ist die Motorsteuerung ausgebildet, die Zündung passend zur Füllungsvorgabe und den berechneten Einspritzzeiten für jedes Synchro-Raster für jeden Zylinder individuell anzupassen.

Auch wenn es mittels des variablen Ventiltriebs möglich wäre bei einem negativen Soll-Drehmomentsprung die Füllung des nächstfolgenden Zylinders schon auf den Zielwert zu erniedrigen, so ist dies in einigen Fällen nicht erlaubt, da die vorgelagerte Kraftstoffmenge für den neuen Füllungswert, der sich lediglich an dem neuen Solldrehmoment orientiert, zu hoch ist. Deshalb ist es erforderlich, dass die Füllungsvorgaben und entsprechende Einspritzzeiten der vorzulagernden Einspritzmenge folgen. Figur 10 zeigt ein Diagramm zur Erläuterung der Wirkungsweise des in Figur 4a bis Figur 4e dargestellten Verfahrens bei einem negativen Soll-Drehmomentsprung bei einer Vierzylinderbrennkraftmaschine mit der Zündfolge 1-2-4-3. Die Brennkraftmaschine in Figur 10 wird bei Vollast und bei 6000 u/min betrieben. Entlang der Abszisse von Figur 10 ist der Kurbelwinkel $\alpha$ in °KW angetragen und entlang der Ordinatevon Figur 10 ist das Ist-Drehmoment der Brennkraftmaschine, das mit der Bezugsziffer 40 bezeichnet ist, und das Soll-Drehmoment der Brennkraftmaschine, das mit der Bezugsziffer 41 bezeichnet ist, angetragen.

Ferner sind entlang der Ordinate von Figur 10 Ventilerhebungskurven von Auslass- und Einlassventilen des ersten bis vierten Zylinders der Brennkraftmaschine, sowie jeweils Ansteuersignale der Einspritzventile der Zylinder 1 bis 4 über dem Kurbelwinkel angetragen. Da in der Figur 10 die gleichen Bezugsziffern wie in Figur 5 verwendet werden, wird zur Erläuterung der verwendeten Bezugsziffern auf die Figur 5 verwiesen.

Figur 10 ist zu entnehmen, dass das Solldrehmoment41 der Brennkraftmaschine nach dem SynchronisationszeitpunkttMBS-1 und vordem SynchronisationszeitpunkttMBS0 einen Sprung von Vollast hin auf etwa 20% Last macht. Dieser negative Soll-Drehmomentsprung wird an dem Synchronisationszeitpunkt tMBS0 erfasst. Wie Figur 10 zu entnehmen ist, kann bei dem ersten Zylinder das Ansteuersignal 56 des Einspritzventils nicht mehr verändert werden, da die Einspritzung vor dem Synchronisationszeitpunkt tMBS0 endet. Bei dem zweiten Zylinderwird die Einspritzung sofort bei Erfassung des negativen Soll-Drehmomentsprungs tMBS0 beendet, d. h., das Ansteuersignal des Einspritzventil des zweiten Zylinders wird sofort abgeschaltet. Damit ist sofort eine Einspritzmengenerniedrigung zu realisieren. Die auf diese Weise zu erzielende Einspritzerniedrigung bei dem zweiten Zylinder wird nun mit Verweis auf Figur 11 beschrieben.

Figur 11 zeigt ein Ablaufdiagramm, das den Verlauf des Ansteuersignals 52 des zweiten Zylinders über dem Kurbelwinkel $\alpha$ in °KW zeigt."wee" gibt den Winkel des Grund-Einspritzendes tigön an. "wes" gibt den Winkel Einlassventil-Schliesst an und "OT" gibt den oberen Totpunkt des Zylinders an. Wie auch schon der Figur 10 zu entnehmen war, wird das Ansteuersignal 52 des Einspritzsignals des zweiten Zylinders sofort bei der Erfassung des negativen Soll-Drehmomentsprungs bei dem Synchronisationszeitpunkt tMBS0 auf null verringert. Die ursprüngliche Ansteuerung sah ein Ansteuersignal 52 vor, das über den Zeitpunkt tMBS0 hinaus noch eine Einspritzung bis zum Zeitpunkt wee vorsah, wie mittels der gepunkteten Linie dargestellt ist. Dementsprechend ist die maximal realisierbare Einspritzmengenerniedrigung dieser punktierte Abschnitt des ursprünglichen Ansteuersignals 52. Diese maximale Erniedrigung wird in Schritt S65 bzw. in Schritt S69 berechnet.

Dabei geht man davon aus, dass noch in dem Synchroraster, in dem der Soll-Drehmomentsprung erkannt wurde, das entsprechende Einspritzventil sofort abgeschaltet werden kann.

Figur 10 ist zu entnehmen, dass das Ansteuersignal 48 des vierten Zylinders ebenfalls verkürzt wurde und die Einspritzung bei dem vierten Zylinder zum Zeitpunkt tMBS0 abgeschaltete wurde. Bei dem dritten Zylinder in Figur 10 wird das Ansteuersignal 44 zu einem späteren Zeitpunkt abgeschaltet, da die Kraftstoff-Ziel-Füllung KFZMBS0 für das verringerte Soll-Drehmoment zum Zeitpunkt tMBS0 noch nicht eingespritz worden ist. Dementsprechend wird bei dem dritten Zylinder die Kraftstoff-Ziel-Füllung KFZMBS0 schon erfüllt. Bei dem dritten Zylinder 3 wird lediglich der gewünschte Vorlagerungswinkel dergestalt verletzt, dass der Vorlagerungswinkel, d.h. die Vorlagerung V zu gross ist. Der gewünschte Vorlagerungswinkel wird das erste Mal bei dem ersten Zylinder in dem folgenden Arbeitsspiel mit dem Ansteuersignal 22 erzielt. Wie Figur 10 zu entnehmen ist, wird zwischen dem Ansteuersignal 62 und einer Öffnung des Einlassventils, das mit der Ventilerhebungskurve 64 angegeben ist, das erste Mal die gewünschte Vorlagerung V eingehalten.

Dann wird eine Soll-Kraftstoffmenge und eine Soll-Kraftstofffüllung für jeden Zylinder n nach den negativen Lastsprüngen berechnet.

Hier wird gleich der Vorgehensweise wie bei dem positiven Lastsprung, wie in Figur 8 dargestellt ist, der-Wunschwertdes Kraftstoffanteils rkwunsch berechnet. Dann wird auf der Grundlage der neu ermittelten Einspritzzeitgaben die jeweils minimal mögliche Kraftstoffmenge rkreal für jeden Zylinder n berechnet. Daraus kann dann die Soll-Füllung rksoll abgeleitet werden. Dies wird nun mit Verweis auf Figur 12 weiter beschrieben. Figur 12 zeigt eine Maximumermittlungseinrichtung 80, die von den Eingangssignalen rkwunsch und rkminreal den grösseren Wert ermittelt und diesen grösseren Wert als die Soll-Füllung rksoll ausgibt. Aus rksoll kann nun mit der folgenden Berechnung die vorgebbare Frischluftfüllung rlsoll für jeden Zylinder n ermittelt werden:

$$\text{rlsoll} = \text{rksoll} \cdot \text{lambdasoll}.$$

Auf diese Art und Weise wird mittels des in den Figuren 4a bis 4e beschriebenen Verfahrens sichergestellt, dass bei einem negativen Soll-Drehmomentsprung sowohl ein vorgegebenes Lambda im Brennraum eingehalten wird, als auch der Soll-Sprung möglichst schnell umgesetzt wird.

## Patentansprüche

1. Verfahren zur Ermittlung von Einspritzventilzeitgaben und Füllungsvorgaben bei einer Brennkraftmaschine mit einer Vielzahl von Zylindem mit variablem Ventiltrieb mit jeweils einem Saugrohr bei einem positiven Solldrehmomentsprung, wobei für jeden Zylinder ein Einspritzventil vorgesehen ist, das Kraftstoff in das Saugrohr einspritzt, wobei, die Einspritzventilzeitgaben jedes Einspritzventils eine Grundeinspritzzeit zwischen einem Grundöffnungszeitpunkt (tigön) und einem Grundschliesszeitpunkt (tigsn) umfassen, umfassend folgende Schritte:

   - Vorgeben eines Synchronisations-Rasters mit einer Vielzahl von vorbestimmten Synchronisationszeitpunkten (tMAS-1, tMAS0, tMAS+1, tMBS-1, tMBS0, tMBS+1);
   - Erfassen eines ersten Solldrehmomentwerts (MAS-1) der Brennkraftmaschine an einem ersten Synchronisationszeitpunkt (tMAS-1) der Vielzahl von vorbestimmten, Synchronisationszeitpunkten (tMAS-1, tMAS0, tMAS+1, tMBS-1, tMBS0, tMBS+1) und eines zweiten Solldrehmomentwerts (MAS0) an einem zweiten Synchronisationszeitpunkt (tMAS0) der Vielzahl von vorbestimmten, Synchronisationszeitpunkten (tMAS-1, tMAS0, tMAS+1, tMBS-1, tMBS0, tMBS+1), wobei der erste Synchronisationszeitpunkt (tMAS-1) vor dem zweiten Synchronisationszeitpunkt (tMAS0) ist:

- Bestimmen eines positiven Solldrehmomentsprungs an dem zweiten Synchronisationszeitpunkt (tMAS0), wenn das zweite Solldrehmoment (MAS0) grösser als das erste Solldrehmoment (MAS-1) ist;
- Erfassen eines Einspritzvorgangs eines Einspritzventils eines ersten Zylinders der Vielzahl von Zylindern, der während des zweiten Synchronisationszeitpunktes (tMAS0) aktiv ist, bei Bestimmung des positiven Solldrehmomentsprungs; und
- Verlängern der Grundeinspritzzeit des Einspritzventils des ersten Zylinders durch Verschieben des Grundschliesszeitpunkts (tigsn) um eine erste Zeitdauer (Δtian) nach hinten,

**dadurch gekennzeichnet, dass** die erste Zeitdauer (Δtian) auf der Grundlage von einer Drehzahl (nmot) der Brennkraftmaschine, einem Schliesswinkel (wes) eines Einlassventils des ersten Zylinders, einer Kraftstofflugzeit bei dem ersten Zylinder und einem Schliesswinkel des Einspritzventils (wee) ermittelt wird.

**2.** Verfahren nach Anspruch 1 ferner unfassend folgende Schritte:

- Ermitteln einer Kraftstoff-Ziel-Füllung (KFZMAS0) für einen zweiten Zylinder der Vielzahl von Zylindern entsprechend dem zweiten Solldrehmomentwert (MAS0);
- Ermitteln eines Öffnungszeitpunktes (tiönn) für das Einspritzventil auf der Grundlage der Kraftstoff-Ziel-Füllung (KFZMAS0);
- Bestimmen, ob der Öffnungszeitpunkt (tiönn) nach oder auf dem ersten Synchronisationszeitpunkt (tMAS-1) ist und vor einem dritten Synchronisationszeitpunkt (tMAS+1) ist, wobei der dritte Synchronisationszeitpunkt (tMAS+1) nach dem zweiten Synchronisationszeitpunkt (tMAS0) ist;
- Verlängern der Grundeinspritzzeit des Einspritzventils des zweiten Zylinders durch Verschieben des Grundöffnungszeiypunkts (tigön) des Einspritzventils des zweiten Zylinders um eine zweite Zeitdauer (Δtibn) nach vorne und durch Verschieben des Grundschliesszeitpunkts (tigsn) um die erste Zeitdauer (Δtian) nach hinten, wenn bestimmt wird, dass der zweite Öffnungszeitpunkt (tiönn) nach oder auf dem ersten Synchronisationszeitpunkt (tMAS-1) ist und vor dem dritten Synchronisationszeitpunkt (tMAS+1) ist.

**3.** Verfahren nach Anspruch 2, **dadurch gekennzeichnet, dass** die zweite Zeitdauer (Δtibn) auf der Grundlage von der Drehzahl (nmot) der Brennkraftmaschine, einem Winkel des Grundöffnungszeitpunkts (tigön) des zweiten Zylinders, einem Winkel des ersten Synchronisatonszeitpunkts (tMAS-1) und einem Schätzwert für einen Schliesswinkel (wes) eines-Einlassventils des zweiten Zylinders ermittelt wird.

**4.** Verfahren nach einem der Ansprüche 1 bis 3, **dadurch gekennzeichnet, dass** die Grundeinspritzzeit des Einspritzventils eines dritten Zylinders der Velzahl von Zylindern durch Verschieben des Grundöffnungszeitpunkts (tigön) des Einspritzventils des dritten Zylinders um eine dritte Zeitdauer (Δticn) und um die zweite Zeitdauer (Δtibn) nach vorne und durch Verschieben des Grundschliesszeitpunkts (tigsn) um die erste Zeitdauer (Δtian) nach hinten auf eine Zwischeneinspritzzeit verlängert wird, wenn bestimmt wird, dass der Öffnungszeitpunkt (tiönn) auf oder nach dem dritten Synchronisationszeitpunkt (tMAS+1) ist.

**5.** Verfahren nach Anspruch 4, **dadurch gekennzeichnet, dass** die dritte Zeitdauer (Δticn) auf der Grundlage von der Drehzahl (nmot) der Brennkraftmaschine, einer Anzahl der Vielzahl von Zylindern der Brennkraftmaschine und einem Schätzwert für einen Schliesswinkel (wes) eines Einlassventils des zweiten Zylinders-ermittelt wird.

**6.** Verfahren nach Anspruch 4 oder 5, **dadurch gekennzeichnet, dass** eine erste Zieleinspritzzeit (tiKFZMAS0) auf der Grundlage des zweiten Solldrehmomentwerts (MAS0) ermittelt wird, und beivierten Zylindern, die dem dritten Zylinderfolgen, solange die Zwischeneinspritzzeit des jeweils vorhergehenden Zylinders angewendet wird, die jeweils um eine dritte Zeitdauer (△ticn) verkürzt wird, bis eine Ziel-Vorlagerung erreicht wird, wobei jeweils bei Erreichen der ersten Zieleinspritzzeit (tiKFZMAS0) das Einspritzventil geschlossen wird.

**7.** Verfahren zur Ermittlung von Einspritzventilzeitgaben und Füllungsvorgaben bei einer Brennkraftmaschine mit einer Vielzahl von Zylindem mit variablem Ventiltrieb mit jeweils einem Saugrohr bei einem negativen Solldrehmomentsprung, wobei für jeden Zylinder ein Einspritzventil vorgesehen ist, das Kraftstoff in das Saugrohr einspritzt, wobei die Einspritzventilzeitgaben jedes Einspritzventils eine Grundeinspritzzeit (tigsn) umfassen, umfassend folgende Schritte:

- Vorgeben eines Synchronisations-Rasters mit einer Vielzahl von vorbestimmten Synchronisationszeitpunkten (tMAS-1, tMAS0, tMAS+1, tMBS-1. tMBS0, tMBS+1);
- Erfassen eines vierten Solldrehmomentwerts (MBS-1) der Brennkraftmaschine an einem vierten Synchronisationszeitpunkt (tMBS-1) der Vielzahl von vorbestimmten, Synchronisationszeitpunkten (tMAS-1, tMAS0, tMAS+1, tMBS-1, tMBS0, tMBS+1) und eines fünften Solldrehmomentwerts (MBS0) an einem fünften Synchronisationszeitpunkt (tMBS0) der Vielzahl von vorbestimmten, Synchronisationszeitpunkten (tMAS-1, tMAS0, tMAS+1, tMBS-1, tMBS0, tMBS+1), wobei der vierte Synchronisationszeitpunkt (tMBS-1) vor dem fünften Synchronisationszeitpunkt (tMBS0) ist;
- Bestimmen eines negativen Solldrehmomentsprungs an dem fünften Synchronisationszeitpunkt (tMBS0), wenn das fünfte Solldrehmoment (MBS0) kleiner als das vierte Solldrehmoment (MBS-1) ist;
- Erfassen eines Einspritzvorgangs eines Einspritzventils eines ersten Zylinders der Vielzahl von Zylindern, der während des fünften Synchronisationszeitpunktes (tMBS0) aktiv ist, bei Bestimmung des negativen Solldrehmomentsprungs; und Verkürzen der Grundeinspritzzeit des Einspritzventils des ersten Zylinders durch Verschieben des Gruhdschliesszeitpunkts (tigsn) um eine vierte Zeitdauer (Δtidn) nach vorne,

**dadurch gekennzeichnet, dass** die vierte Zeitdauer (Δtidn) auf der Grundlage von einer Drehzahl (nmot) der Brennkraftmaschine, einem Schliesswinkel des Einlassventils und einem Winkel des vierten Synchronisationszeitpunktes (tMBS0) ermittelt wird.

**8.** Verfahren nach einem der Ansprüche 7, **dadurch gekennzeichnet, dass** eine zweite Zieleinspritzzeit (tiKFZMSB0) auf der Grundlage des fünften Solldrehmomentwerts (MBS0) ermittelt wird, und bei zweiten Zylindem, die dem ersten Zylinder folgen, der jeweilige Grundschliesszeitpunkt (tigsn) jeweils um eine fünfte Zeitdauer (Δtien) nach vorne verschoben wird, bis die zweite Zieleinspritzzeit (tiKFZMSB0) erreicht wird; wobei der jeweilige Grundöffnungszeitpunkt (tigön) beibehalten wird, und, wenn die zweite Zieleinspritzzeit (tiKFZMSB0) erreicht ist, solange als Einspritzzeitvorgaben für die zweiten Zylinder der jeweilige Grundöffnüngszeitpunkt (tigön) als Öffnungszeitpunkt des jeweiligen-Einsprizventils und als Schliesszeitpunkt eine Summe aus dem jeweiligen Grundöffnungszeitpunkt (tigön) und der zweiten Zieleinsprizdauer (tiKFZMSB0) beibehalten wird, bis eine Ziel-Vorlagerung (V) erreicht wird.

**9.** Verfahren nach einem der Ansprüche 7 bis 8, **dadurch gekennzeichnet, dass** die fünfte Zeitdauer (Δtien) auf der Grundlage von der Drehzahl (nmot) der Brennkraftmaschine und einer Anzahl der Zylinder der Brennkraftmaschine ermittelt wird.

**10.** Verfahren nach einem der Ansprüche 7 bis 9, **dadurch gekennzeichnet, dass** bei Bestimmung des negativen Solldrehmomentsprungs eine zweite Kraftstoff-Ziel-Füllung (KFZMBS0) auf der Grundlage des fünften Solldrehmoments (MBS0), eines gewünschten Zündwinkelwirkungsgrades und eines Soll-Lambdawirkungsgrades berechnet wird, eine zweite realisierbare Kraftstoff-Füllung für jeden der ersten und zweiten Zylinder entsprechend den veränderten Grundeinspritzzeiten der ersten und zweiten Zylinder bestimmt wird, ein Vergleich zwischen der zweiten Kraftstoff-Ziel-Füllung (KFZMBS0) und der zweiten realisierbaren Kraftstoff-Füllung der ersten und zweite Zylinder ausgeführt wird, und die grössere Kraftstoffmenge der zweiten Kräftstoff-Ziel-Füllung-(KFZMBS0) und der zweiten realisierbaren Kraftstoff-Füllung an ein Steuergerät einer variablen Ventilsteuerung als Soll-Füllung (rksolln) zur Berechnung einer Soll-Luftfüllung (rlsolln) der ersten und zweiten Zylinder ausgegeben wird.

**11.** Vorrichtung zur Durchführung des Verfahrens nach Anspruch 1.

**12.** Vorrichtung zur Durchführung des Verfahrens nach Anspruch 7.

## Claims

**1.** Method for determining injection valve time specifications and charging specifications in an internal combustion engine having a plurality of cylinders with a variable valve drive each with an intake manifold for a positive jump in setpoint torque, an injection valve which injects fuel into the intake manifold being provided for each cylinder and the injection valve time specifications of each injection valve comprising a basic injection time between a basic opening time (tigön) and a basic closing time (tigsn), comprising the following steps:

- specifying a synchronization pattern with a plurality of predetermined synchronization times (tMAS-1, tMAS0, tMAS+1, tMBS-1, tMBS0, tMBS+1);
- sensing a first setpoint torque value (MAS-1) of the internal combustion engine at a first synchronization time (tMAS-1) of the plurality of predetermined synchronization times (tMAS-1, tMAS0, tMAS+1, tMBS-1, tMBS0, tMBS+1), and of a second setpoint torque value (MAS0) at a second synchronization time (tMAS0) of the plurality of predetermined synchronization times (tMAS-1, tMAS0, tMAS+1, tMBS-1, tMBS0, tMBS+1), the first synchronization time (tMAS-1) occurring before the second synchronization time (tMAS0);
- determination of a positive jump in setpoint torque at the second synchronization time (tMAS0) if the second setpoint torque (MAS0) is greater than the first setpoint torque (MAS-1);
- sensing of an injection process of an injection valve of a first cylinder of the plurality of cylinders which is active during the second synchronization time (tMAS0) when the positive jump in setpoint torque is determined; and
- lengthening of the basic injection time of the injection valve of the first cylinder by moving the basic closing time (tigsn) back by a first time period (Δtian),

**characterized in that** the first time period (Δtian) is determined on the basis of an engine speed (nmot) of the internal combustion engine, a closing angle (wes) of an inlet valve of the first cylinder, a fuel flight time in the first cylinder and a closing angle of the injection valve (wee).

2. Method according to Claim 1, also comprising the following steps:

- determination of a fuel target charge (KFZMAS0) for a second cylinder of the plurality of cylinders corresponding to the second setpoint torque value (MAS0);
- determination of an opening time (ti6nn) for the injection valve on the basis of the fuel target charge (KFZMAS0);
- determination whether the opening time (tiönn) is after or at the first synchronization time (tMAS-1) and before a third synchronization time (tMAS+1), the third synchronization time (tMAS+1) being after the second synchronization time (tMAS0);
- lengthening of the basic injection time of the injection valve of the second cylinder by moving the basic opening time (tigön) of the injection valve of the second cylinder forward by a second time period (Δtibn), and by moving the basic closing time (tigsn) back by the first time period (Δtian) if it is determined that the second opening time (tiönn) is after or at the first synchronization time (tMAS-1) and before the third synchronization time (tMAS+1).

3. Method according to Claim 2, **characterized in that** the second time period (Δtibn) is determined on the basis of the engine speed (nmot) of the internal combustion engine, an angle of the basic opening time (tigön) of the second cylinder, an angle of the first synchronization time (tMAS-1) and an estimated value for a closing angle (wes) of an inlet valve of the second cylinder.

4. Method according to one of Claims 1 to 3, **characterized in that** the basic injection time of the injection valve of a third cylinder of the plurality of cylinders is lengthened to an intermediate injection time by moving forward the basic opening time (tigön) of the injection valve of the third cylinder by a third time period (Δticn) and by the second time period (Δtibn), and by moving the basic closing time (tigsn) back by the first time period (Δtian) if it is determined that the opening time (Δtiönn) is at or after the third synchronization time (tMAS+1).

5. Method according to Claim 4, **characterized in that** the third time period (Δticn) is determined on the basis of the engine speed (nmot) of the internal combustion engine, a number of the plurality of cylinders of the internal combustion engine and an estimated value for a closing angle (wes) of an inlet valve of the second cylinder.

6. Method according to Claim 4 or 5, **characterized in that** a first target injection time (tiKFZMASO) is determined on the basis of the second setpoint torque value (MAS0), and in the case of fourth cylinders which follow the third cylinder as long as the intermediate injection time of the respectively preceding cylinder, which is respectively shortened by a third time period (Δticn) is applied until a target forward movement is achieved, the injection valve being closed whenever the first target injection time (tiKFZMAS0) is achieved.

7. Method for determining injection valve time specifications and charge specifications in an internal combustion engine having a plurality of cylinders with a variable valve drive each with an intake manifold for a negative jump in setpoint torque,

- an injection valve which injects fuel into the intake manifold being provided for each cylinder, the injection valve time specifications of each injection valve comprising a basic injection time between a basic opening time (tigön) and a basic closing time (tigsn), comprising the following steps:
- specification of a synchronization pattern with a plurality of predetermined synchronization times (tMAS-1, tMAS0, tMAS+1, tMBS-1, tMBS0, tMBS+1);

- sensing of a fourth setpoint torque value (MBS-1) of the internal combustion engine at a fourth synchronization time (tMBS-1) of the plurality of predetermined synchronization times (tMAS-1, tMAS0, tMAS+1, tMBS-1, tMBS0, tMBS+1) and of a fifth setpoint torque value (MBS0) at a fifth synchronization time (tMBS0) of the plurality of predetermined synchronization times (tMAS-1, tMAS0, tMAS+1, tMBS-1, tMBS0, tMBS+1), the fourth synchronization time (tMBS-1) being before the fifth synchronization time (tMBS0);
- determination of a negative jump in setpoint torque at the fifth synchronization time (tMBS0), if the fifth setpoint torque (MBS0) is smaller than the fourth setpoint torque (MBS-1);
- sensing of an injection process of an injection valve of a first cylinder of the plurality of cylinders which is active during the fifth synchronization time (tMBS0) when the negative jump in setpoint torque is determined; and
- shortening of the basic injection time of the injection valve of the first cylinder by moving forward the basic closing time (tigsn) by a fourth time period (Δtidn),

**characterized in that** the fourth time period (Δtidn) is determined on the basis of an engine speed (nmot) of the internal combustion engine, a closing angle of the injection valve and an angle of the fourth synchronization time (tMBS0).

8. Method according to Claim 7, **characterized in that** a second target injection time (tiKFZMSB0) is determined on the basis of the fifth setpoint torque value (MBS0), and when there are second cylinders which follow the first cylinder the respective basic closing time (tigsn) is moved forward in each case by a fifth time period (Δtien) until the second target injection time (tiKFZMSB0), wherein the respective basic opening time (tigön) is retained, and if the second target injection time (tiKFZMSB0) is achieved, as injection time specifications for the second cylinders, the respective basic opening time (tigön) is retained as the opening time of the respective injection valve and a sum of the respective basic opening time (tigön) and the second target injection period (tiKFZMSB0) is retained as the closing time, until a target forward movement (V) is achieved.

9. Method according to one of Claims 7 to 8, **characterized in that** the fifth time period (Δtien) is determined on the basis of the rotational speed (nmot) of the internal combustion engine and a number of the cylinders of the internal combustion engine.

10. Method according to one of Claims 7 to 9, **characterized in that** when the negative jump in the setpoint torque is determined, a second fuel target charge (KFZMBS0) is determined on the basis of the fifth setpoint torque (MBS0), a desired ignition angle efficiency level and a setpoint lambda efficiency level, a second realizable fuel charge is determined for each of the first and second cylinders corresponding to the changed basic injection times of the first and second cylinders, a comparison between the second fuel target charge (KFZMBS0) and the second realizable fuel charge of the first and second cylinders is carried out, and the larger fuel quantity of the second fuel target charge (KFZMBS0) and of the second realizable fuel charge is output to a control unit of a variable valve controller as a setpoint fuel charge (rksolln) in order to calculate a setpoint air charge (rlsolln) of the first and second cylinders.

11. Device for carrying out the method according to Claim 1.

12. Device for carrying out the method according to Claim 7.

**Revendications**

1. Procédé de détermination de données temporelles et de consignes de remplissage pour un injecteur dans un moteur à combustion interne comprenant plusieurs cylindres à soupapes variables avec à chaque fois une tubulure d'admission, lors d'une variation positive du couple de rotation de consigne, selon lequel chaque cylindre comporte un injecteur de carburant dans la tubulure d'admission, les données d'injection temporelles de chaque injecteur comprenant un temps d'injection de base entre un instant d'ouverture de base (tigön) et un instant de fermeture de base (tigsn), et comprenant les étapes suivantes :

- application d'une trame de synchronisation ayant une pluralité de instants de synchronisation prédéfinis (tMAS-1, tMAS0, tMAS+1, tMBS-1, tMBS0, tMSB+1),
- détermination d'une première valeur de consigne du couple de rotation (MAS-1) du moteur à combustion interne à un premier instant de synchronisation (tMAS-1) parmi la pluralité d'instants de synchronisation prédéfinis (tMAS-1, tMAS0, tMAS+1, tMBS-1, tMBS0, tMSB+1) et d'une deuxième valeur de consigne du couple de rotation (MAS0) à un deuxième instant de synchronisation (tMAS0) parmi la pluralité de instants de synchronisation prédéfinis (tMAS-1, tMAS0, tMAS+1, tMBS-1, tMBS0, tMSB+1), le premier instant de synchronisation (tMAS-1) se situant avant le deuxième instant de synchronisation (tMAS0) ;
- définition d'une variation positive du couple de rotation de consigne au deuxième instant de synchronisation (tMAS0) lorsque le deuxième couple de rotation de consigne (MAS0) est supérieur au premier couple de rotation de consigne (MAS-1) ;
- détermination d'un processus d'injection dans premier cylindre parmi la pluralité de cylindres, pour un injecteur activé au deuxième instant de synchronisation (tMAS0), lors de la définition de la variation positive du couple de rotation de consigne ; et
- prolongement du temps d'injection de base de l'injecteur du premier cylindre en décalant vers l'arrière le instant de fermeture de base (tigsn) d'une certaine durée (Δtian),

**caractérisé en ce que**
la première durée (Δtian) est déterminée à partir d'une vitesse de rotation (nmot) du moteur à combustion interne, d'un angle de fermeture (wes) d'une soupape d'admission du premier cylindre, d'un temps de trajet du carburant dans le premier cylindre et d'un angle de fermeture de l'injecteur (wee).

**2.** Procédé selon la revendication 1, comprenant en outre les étapes suivantes :

- détermination d'un remplissage cible de carburant (KFZMAS0) pour un deuxième cylindre parmi la pluralité de cylindres conformément à la deuxième valeur de consigne du couple de rotation (MAS0) ;
- détermination d'un instant d'ouverture (tiönn) pour l'injecteur à partir du remplissage cible de carburant (KFZMAS0) ;
- définition, si l'instant d'ouverture (tiönn) se situe après ou sur le premier instant de synchronisation (tMAS-1) et avant un troisième instant de synchronisation (tMAS+1), le troisième instant de synchronisation (tMAS+1) se situant après le deuxième instant de synchronisation (tMAS0) ;
- prolongement du temps d'injection de base de l'injecteur du deuxième cylindre en décalant vers l'avant l'instant d'ouverture de base (tigön) de l'injecteur du deuxième cylindre d'une deuxième durée (Δtibn) et en décalant vers l'arrière l'instant de fermeture de base (tigsn) de la première durée (Δtian) lorsqu'on a définit que le deuxième instant d'ouverture (tiönn) se situe après ou sur le premier instant de synchronisation (tMAS-1) et avant le troisième instant de synchronisation (tMAS+1).

**3.** Procédé selon la revendication 2,
**caractérisé en ce que**
la deuxième durée (Δtibn) est déterminée à partir de la vitesse de rotation (nmot) du moteur à combustion interne, d'un angle d'instant d'ouverture de base (tigön) du deuxième cylindre, d'un angle du premier instant de synchronisation (tMAS-1) et d'une valeur estimée pour un angle de fermeture (wes) d'une soupape d'admission du deuxième cylindre.

**4.** Procédé l'une des revendications 1 à 3,
**caractérisé en ce que**
le temps d'injection de base de l'injecteur d'un troisième cylindre parmi la pluralité de cylindres est rallongé d'un temps d'injection intermédiaire en décalant vers l'avant l'instant d'ouverture de base (tigön) de l'injecteur du troisième cylindre d'une troisième durée (Δticn) et de la deuxième durée (Δtibn) et en décalant vers l'arrière l'instant de fermeture de base (tigsn) de la première durée (Δtian) lorsqu'on a défini que l'instant d'ouverture (tiönn) se situe sur ou après le troisième instant de synchronisation (tMAS+1) .

**5.** Procédé selon la revendication 4,
**caractérisé en ce que**
la troisième durée (Δticn) est déterminée à partir de la vitesse de rotation (nmot) du moteur à combustion interne, d'un nombre de la pluralité de cylindres du moteur à combustion interne et d'une valeur estimée pour un angle de fermeture (wes) d'une soupape d'admission du deuxième cylindre.

**6.** Procédé selon la revendication 4 ou 5,
**caractérisé en ce qu'**
un premier temps d'injection cible (tiKFZMAS0) est déterminé à partir de la deuxième valeur de consigne du couple de rotation (MAS0) et, dans le cas des quatrièmes cylindres qui suivent le troisième cylindre, tant que le temps d'injection intermédiaire du cylindre respectivement précédent est appliqué et raccourci respectivement d'une troisième durée (Δticn) jusqu'à ce qu'un déplacement cible vers l'avant soit atteint, l'injecteur étant fermé respectivement lorsque le premier temps d'injection cible (tiKFZMAS0) est atteint.

7. Procédé de détermination de données temporelles et de consignes de remplissage pour un injecteur dans un moteur à combustion interne comprenant une pluralité de cylindres à soupapes variables avec chaque fois une tubulure d'admission, lors d'une variation négative du couple de rotation de consigne, dans lequel chaque cylindre comporte un injecteur de carburant dans la tubulure d'admission, les données d'injection temporelles de chaque injecteur comprenant un temps d'injection de base entre un instant d'ouverture de base (tigôn) et un instant de fermeture de base (tigsn), et comprenant les étapes suivantes :

- application d'une trame de synchronisation ayant une pluralité d' instants de synchronisation prédéfinis (tMAS-1, tMAS0, tMAS+1, tMBS-1, tMBS0, tMSB+1),
- détermination d'une quatrième valeur de consigne du couple de rotation (MBS-1) du moteur à combustion interne à un quatrième instant de synchronisation (tMBS-1) parmi la pluralité de instants de synchronisation prédéfinis (tMAS-1, tMAS0, tMAS+ 1, tMBS-1, tMBS0, tMSB+1) et d'une cinquième valeur de consigne du couple de rotation (MBS0) à un cinquième instant de synchronisation (tMBS0) parmi la pluralité de instants de synchronisation prédéfinis (tMAS-1, tMAS0, tMAS+1, tMBS-1, tMBS0, tMSB+1), le quatrième instant de synchronisation (tMBS-1) se situant avant le cinquième instant de synchronisation (tMBS0) ;
- définition d'une variation négative du couple de rotation de consigne au cinquième instant de synchronisation (tMBS0) lorsque le cinquième couple de rotation de consigne (MBS0) est inférieur au quatrième couple de rotation de consigne (MBS-1) ;
- détermination d'un processus d'injection dans un premier cylindre parmi la pluralité de cylindres, pour un injecteur activé au cinquième instant de synchronisation (tMBS0), lors de la définition de la variation négative du couple de rotation de consigne ; et
- raccourcissement du temps d'injection de base de l'injecteur du premier cylindre en décalant vers l'avant l'instant de fermeture de base (tigsn) d'une quatrième durée (Δtidn),

**caractérisé en ce que**
la quatrième durée (Δtidn) est déterminée à partir d'une vitesse de rotation (nmot) du moteur à combustion interne, d'un angle de fermeture d'une soupape d'admission et d'un angle du quatrième instant de synchronisation (tMBS0).

8. Procédé selon la revendication 7,
**caractérisé en ce qu'**
un deuxième temps d'injection cible (tiKFZMSB0) est déterminé à partir de la cinquième valeur de consigne du couple de rotation (MBS0) et, dans le cas des deuxièmes cylindres qui suivent le premier cylindre, l'instant de fermeture de base respectif (tigsn) est décalé respectivement vers l'avant d'une cinquième durée (Δtien) jusqu'à ce que le deuxième temps d'injection cible (tiKFZMSB0) soit atteint, l'instant d'ouverture de base respectif (tigön) étant conservé et lorsque le deuxième temps d'injection cible (tiKFZMSB0) est atteint, tant que, comme données d'injection temporelles pour les deuxièmes cylindres du instant respectif d'ouverture de base (tigön), comme instant d'ouverture de l'injecteur respectif et comme instant de fermeture, une somme d'instant d'ouverture de base respectif (tigön) et du deuxième temps d'injection cible (tiKFZMSB0) est conservée jusqu'à ce qu'un déplacement cible vers l'avant (V) soit atteint.

9. Procédé selon l'une des revendications 7 à 8,
**caractérisé en ce que**
la cinquième durée (Δtien) est déterminée à partir de la vitesse de rotation (nmot) du moteur à combustion interne et d'un nombre de cylindres du moteur à combustion interne.

10. Procédé selon l'une des revendications 7 à 9,
**caractérisé en ce que**
pour la définition de la variation négative du couple de rotation de consigne, on calcule un deuxième remplissage cible de carburant (KFZMBS0) est calculé à partir du cinquième couple de rotation de consigne (MBS0), d'un rendement d'angle d'allumage souhaité et d'un rendement lambda de consigne, on définit un deuxième remplissage de carburant réalisable pour chacun des premier et deuxième cylindres correspondant aux temps d'injection de base modifiés des deuxièmes et premiers cylindres défini, on fait une comparaison entre le deuxième remplissage cible de carburant (KFZMBS0) et le deuxième remplissage de carburant réalisable des premier et deuxième cylindres, et la quantité de carburant plus importante du deuxième remplissage cible de carburant (KFZMBS0) et du deuxième remplissage de carburant réalisable ést envoyée vers un appareil de commande d'une commande de soupape variable sous forme de remplissage de carburant de consigne (rksolln) pour calculer un remplissage d'air de consigne (risolln) des premier et deuxième cylindres.

**11.** Dispositif pour mettre en oeuvre le procédé selon la revendication 1.

**12.** Dispositif pour mettre en oeuvre le procédé selon la revendication 7.

Fig. 1

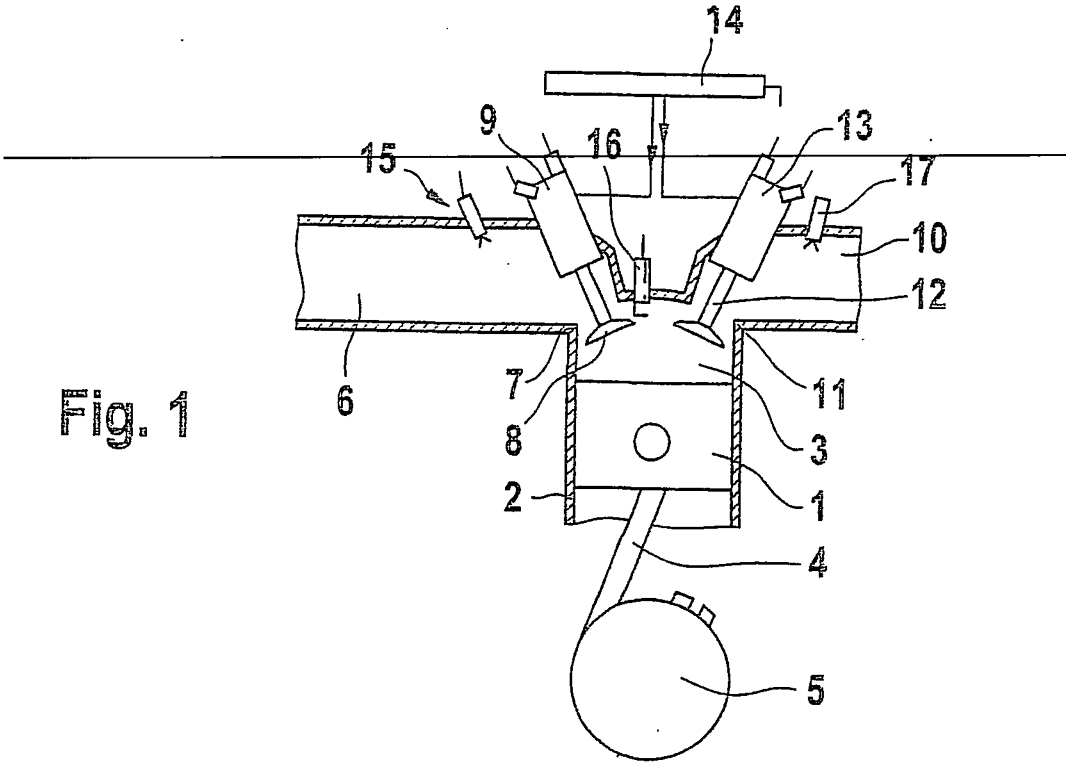


Fig. 2

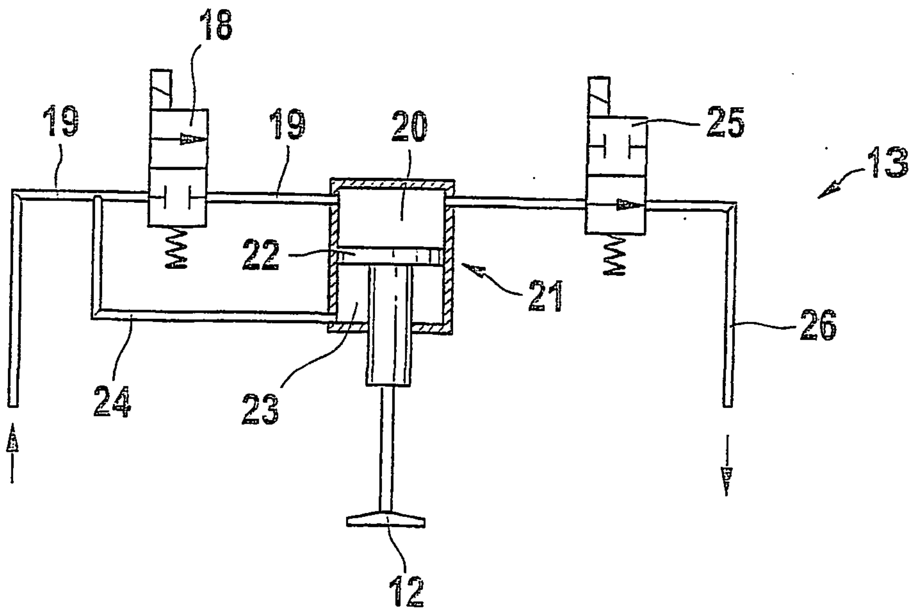

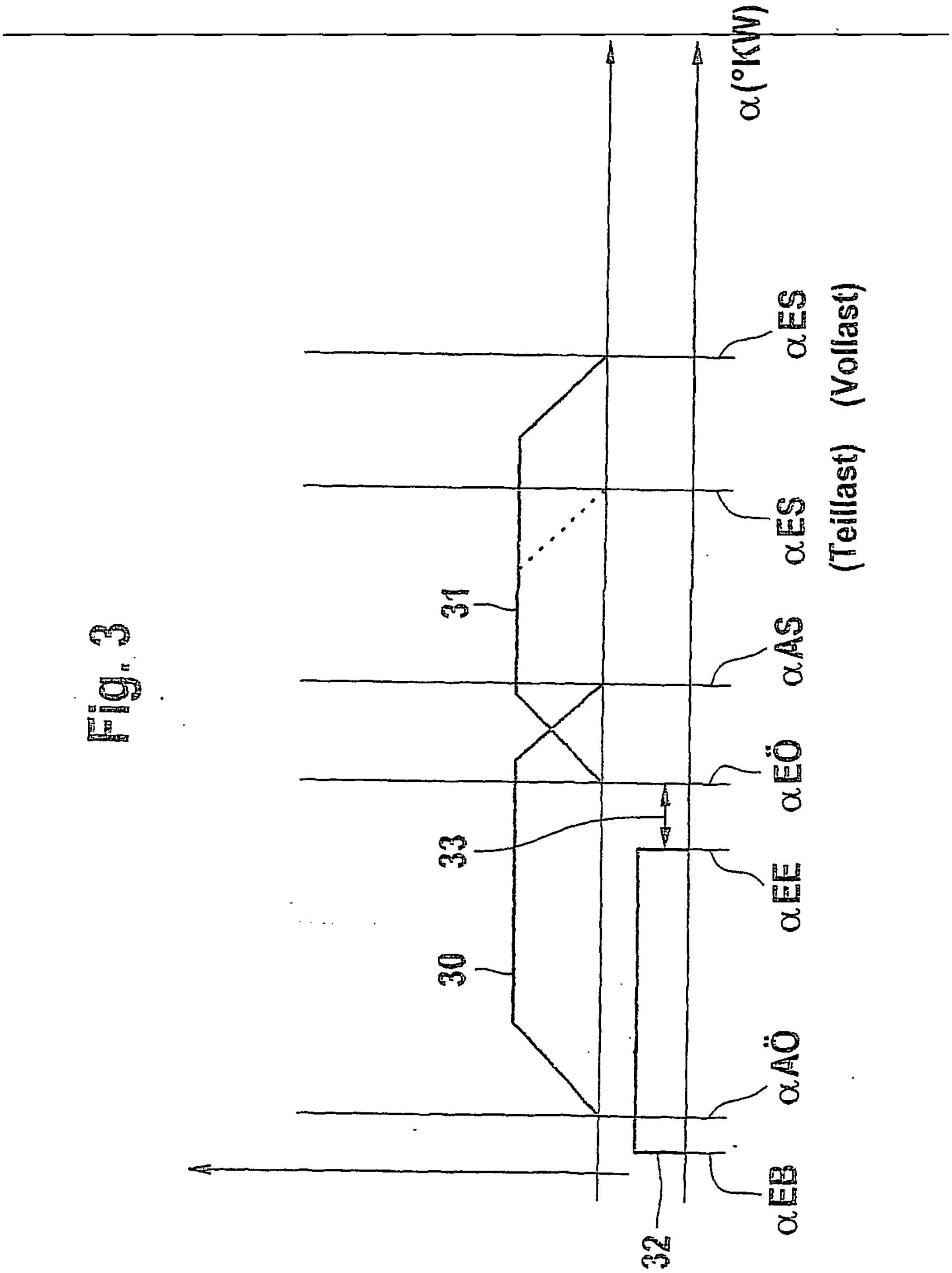


Fig. 3

Fig. 4a

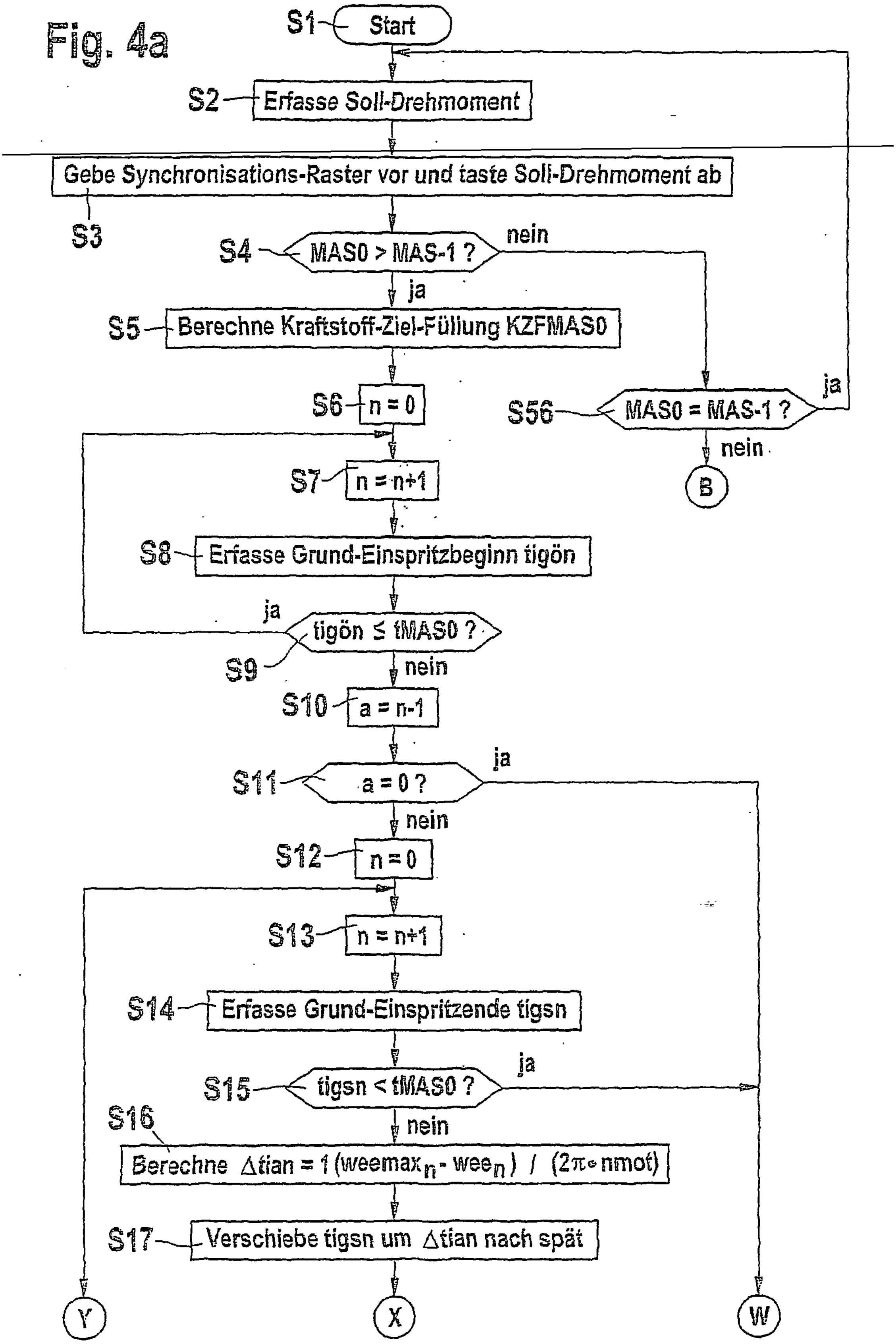
S1 Start
S2 Erfasse Soll-Drehmoment
Gebe Synchronisations-Raster vor und taste Soll-Drehmoment ab
S3
S4 MAS0 > MAS-1 ?
nein
ja
S5 Berechne Kraftstoff-Ziel-Füllung KZFMAS0
S6 n = 0
S56 MAS0 = MAS-1 ?
ja
nein
B
S7 n = n+1
S8 Erfasse Grund-Einspritzbeginn tigön
ja
tigön ≤ tMAS0 ?
S9
nein
S10 a = n-1
S11 a = 0 ?
ja
nein
S12 n = 0
S13 n = n+1
S14 Erfasse Grund-Einspritzende tigsn
S15 tigsn < tMAS0 ?
ja
nein
S16
Berechne Δtian = 1 (weemax_n - wee_n) / (2π • nmot)
S17 Verschiebe tigsn um Δtian nach spät
Y
X
W

Fig. 4b

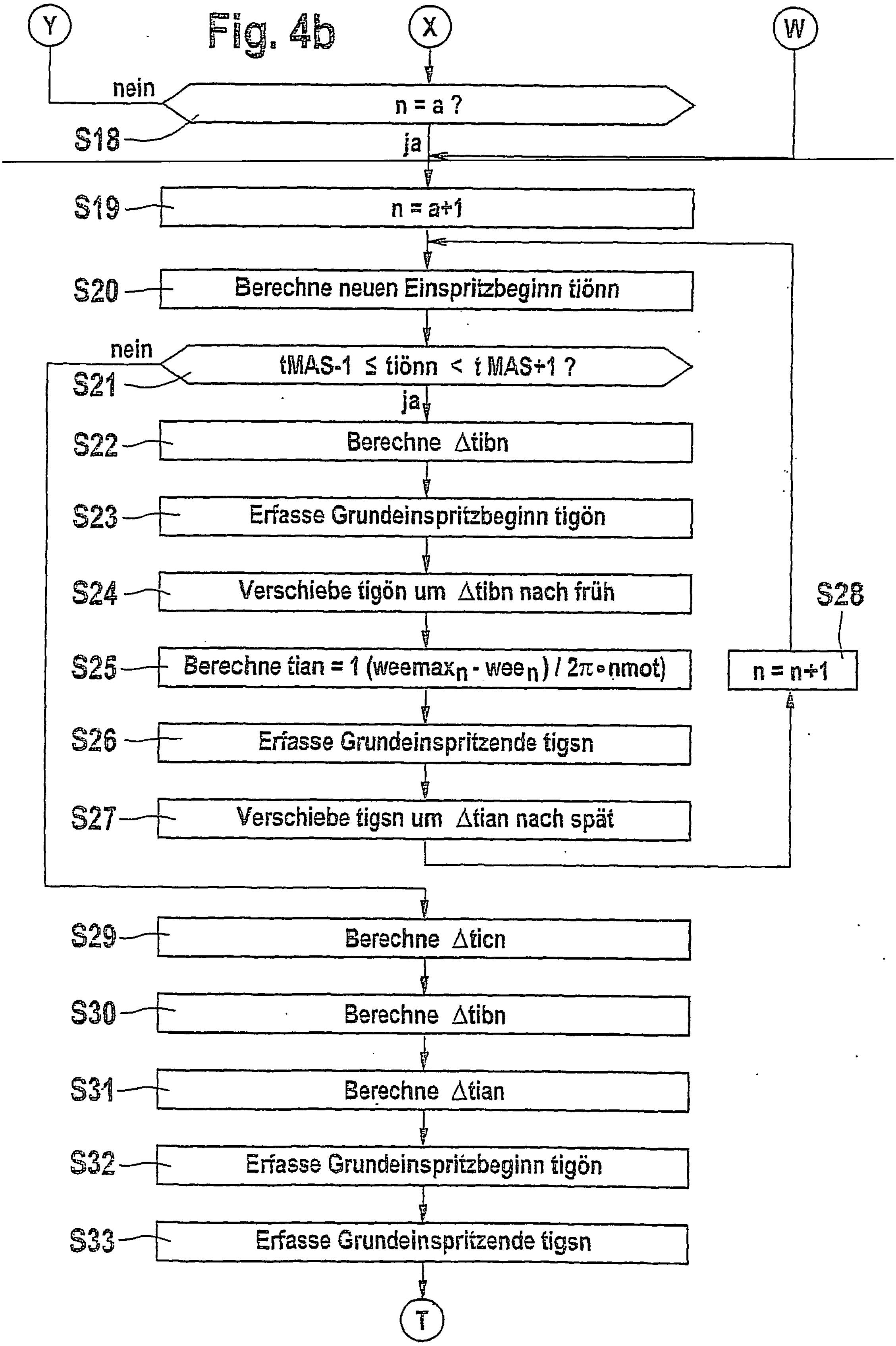
Y
X
W
nein
n = a ?
S18
ja
S19
n = a+1
S20
Berechne neuen Einspritzbeginn tiönn
nein
tMAS-1 ≤ tiönn < t MAS+1 ?
S21
ja
S22
Berechne Δtibn
S23
Erfasse Grundeinspritzbeginn tigön
S24
Verschiebe tigön um Δtibn nach früh
S28
S25
Berechne tian = 1 (weemax$_n$ - wee$_n$) / 2π∘nmot)
n = n+1
S26
Erfasse Grundeinspritzende tigsn
S27
Verschiebe tigsn um Δtian nach spät
S29
Berechne Δticn
S30
Berechne Δtibn
S31
Berechne Δtian
S32
Erfasse Grundeinspritzbeginn tigön
S33
Erfasse Grundeinspritzende tigsn
T

Fig. 4c

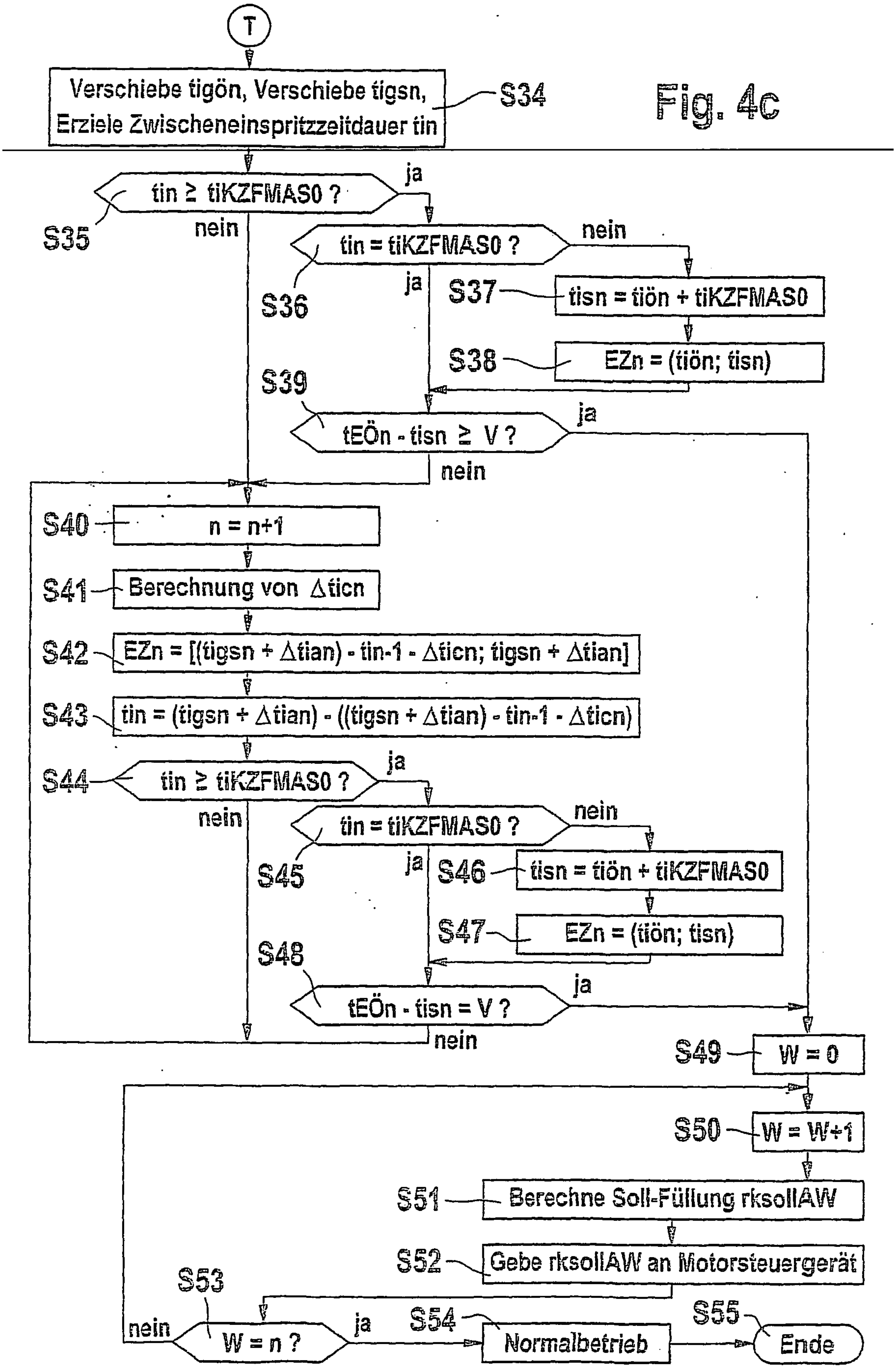
T
Verschiebe tigön, Verschiebe tigsn, Erziele Zwischeneinspritzzeitdauer tin
S34
tin ≥ tiKZFMAS0 ?
S35
ja
nein
tin = tiKZFMAS0 ?
S36
ja
nein
S37
tisn = tiön + tiKZFMAS0
S38
EZn = (tiön; tisn)
S39
tEÖn - tisn ≥ V ?
ja
nein
S40
n = n+1
S41
Berechnung von Δticn
S42
EZn = [(tigsn + Δtian) - tin-1 - Δticn; tigsn + Δtian]
S43
tin = (tigsn + Δtian) - ((tigsn + Δtian) - tin-1 - Δticn)
S44
tin ≥ tiKZFMAS0 ?
ja
nein
tin = tiKZFMAS0 ?
S45
ja
nein
S46
tisn = tiön + tiKZFMAS0
S47
EZn = (tiön; tisn)
S48
tEÖn - tisn = V ?
ja
nein
S49
W = 0
S50
W = W+1
S51
Berechne Soll-Füllung rksollAW
S52
Gebe rksollAW an Motorsteuergerät
S53
W = n ?
nein
ja
S54
Normalbetrieb
S55
Ende

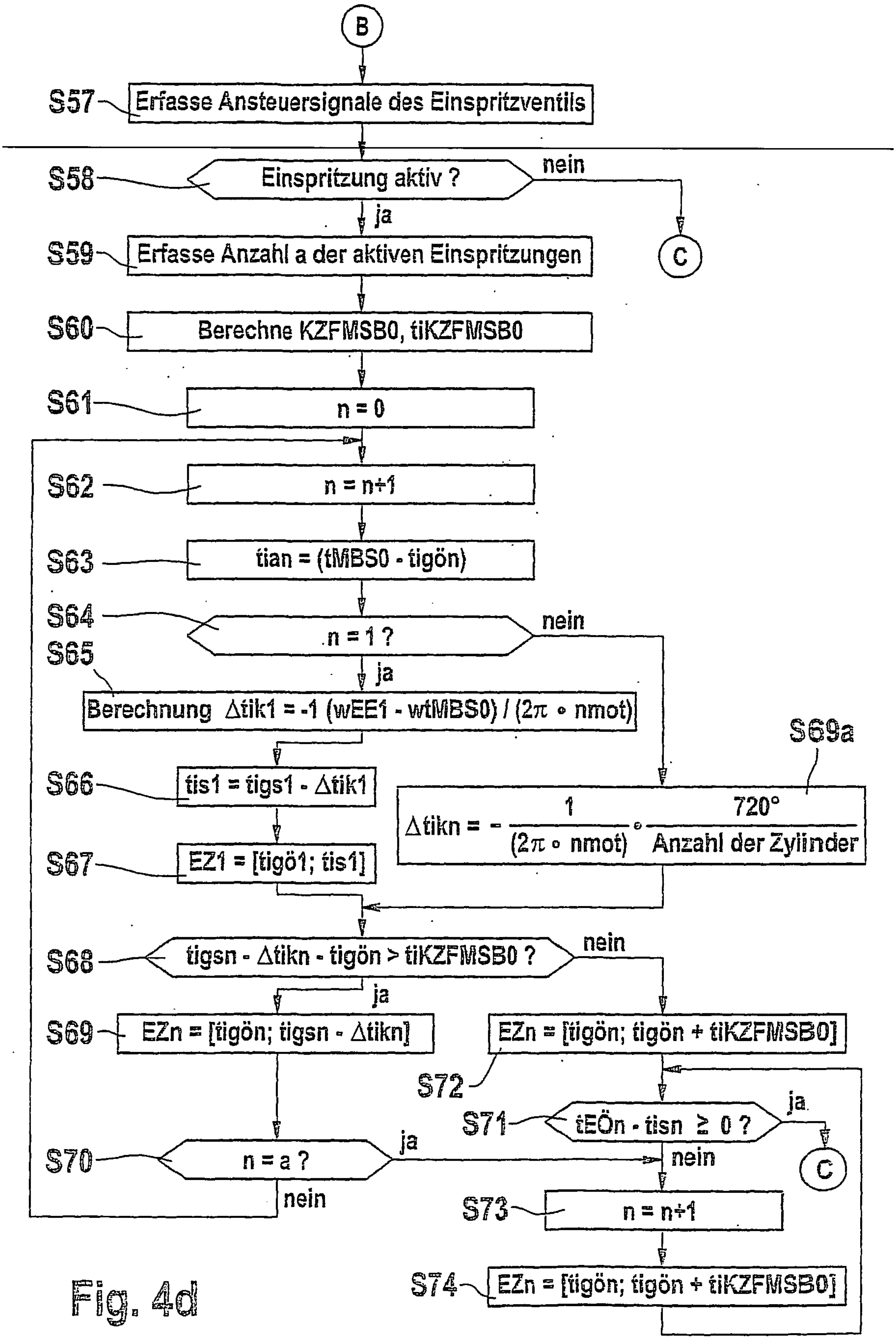
B
S57
Erfasse Ansteuersignale des Einspritzventils
S58
Einspritzung aktiv ?
nein
C
ja
S59
Erfasse Anzahl a der aktiven Einspritzungen
S60
Berechne KZFMSB0, tiKZFMSB0
S61
n = 0
S62
n = n+1
S63
tian = (tMBS0 - tigön)
S64
n = 1 ?
nein
S65
ja
Berechnung Δtik1 = -1 (wEE1 - wtMBS0) / (2π • nmot)
S69a
S66
tis1 = tigs1 - Δtik1
Δtikn = - 1/(2π • nmot) • 720°/Anzahl der Zylinder
S67
EZ1 = [tigö1; tis1]
S68
tigsn - Δtikn - tigön > tiKZFMSB0 ?
nein
ja
S69
EZn = [tigön; tigsn - Δtikn]
EZn = [tigön; tigön + tiKZFMSB0]
S72
S71
tEÖn - tisn ≥ 0 ?
ja
S70
n = a ?
ja
nein
C
nein
S73
n = n+1
S74
EZn = [tigön; tigön + tiKZFMSB0]
Fig. 4d

Fig. 4e

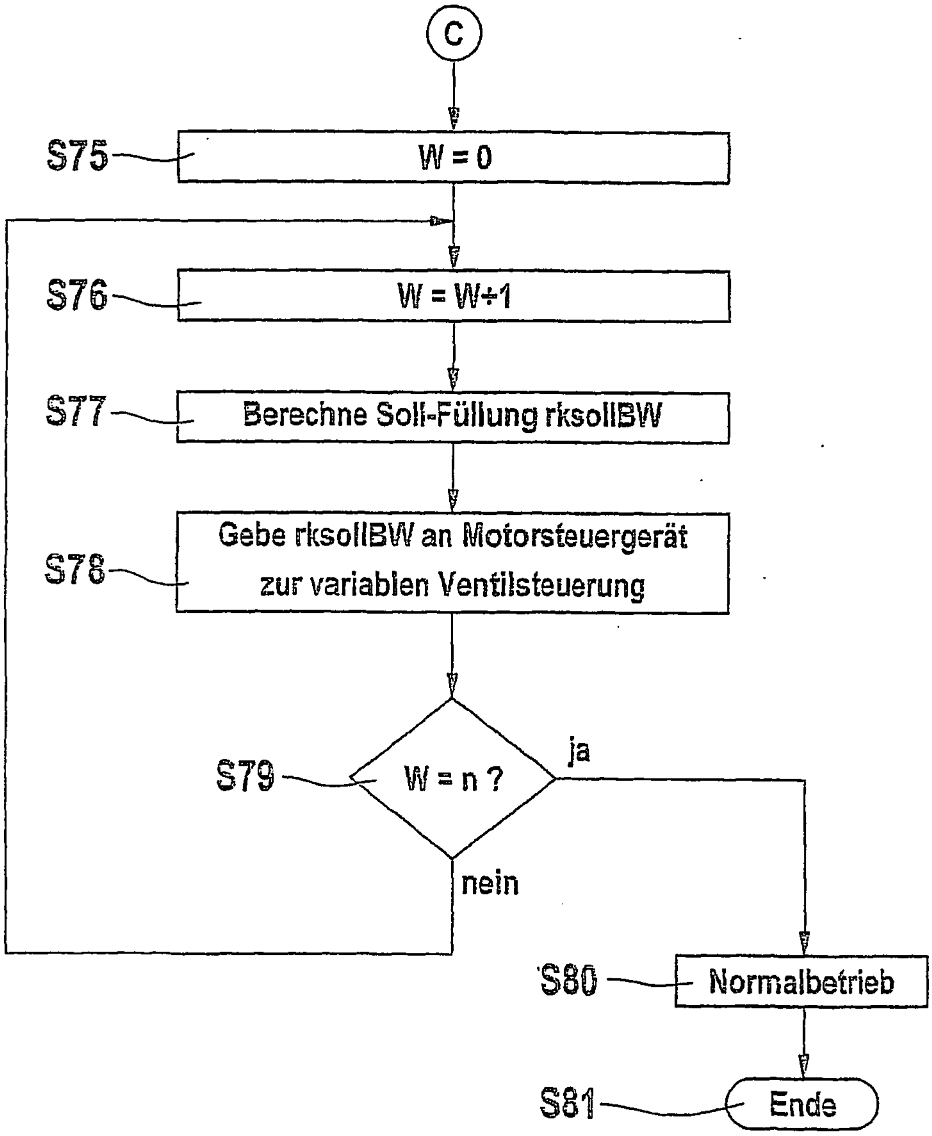
C
S75
W = 0
S76
W = W+1
S77
Berechne Soll-Füllung rksollBW
S78
Gebe rksollBW an Motorsteuergerät zur variablen Ventilsteuerung
S79
W = n ?
ja
nein
S80
Normalbetrieb
S81
Ende

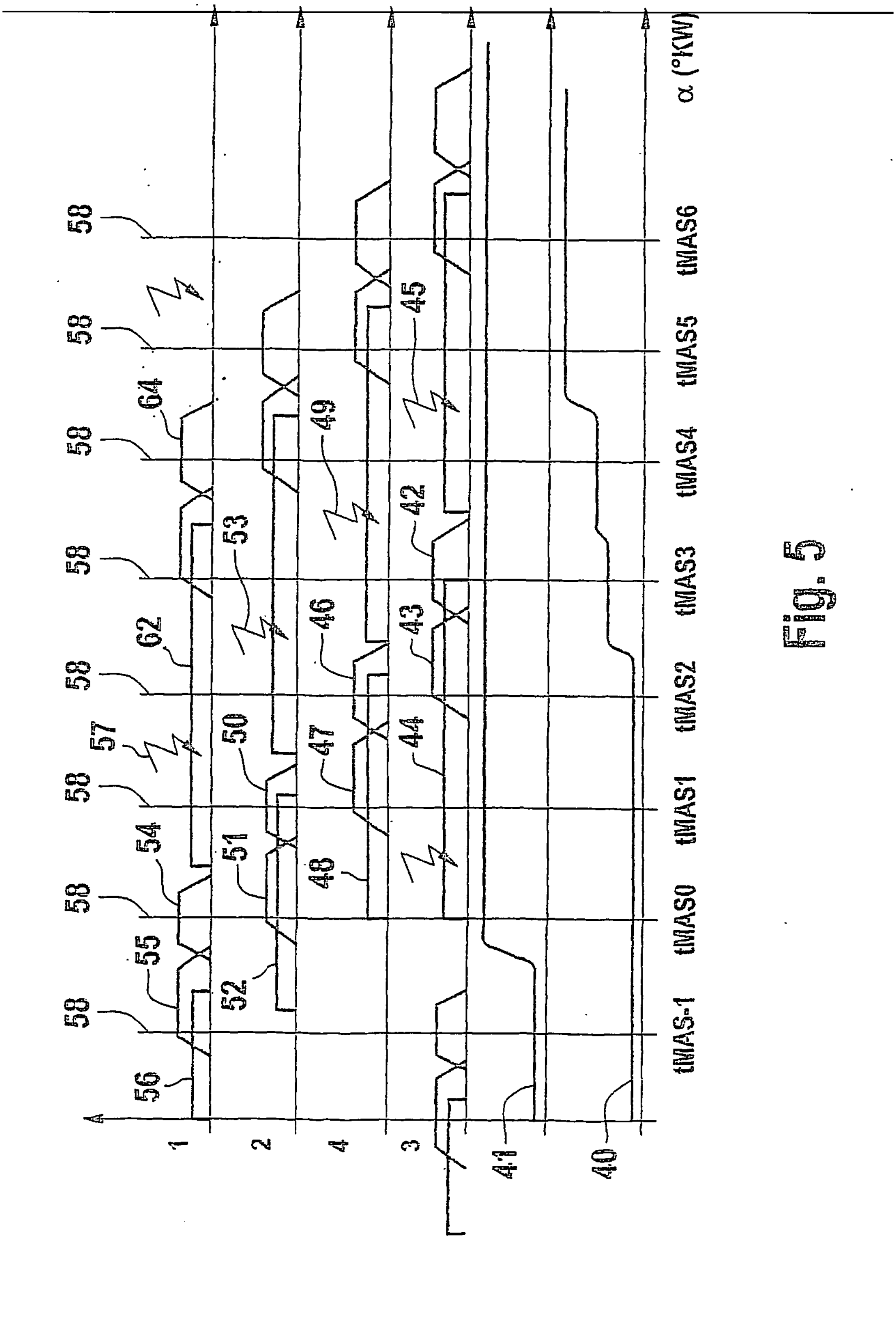
1
2
4
3
41
40
56
55
52
54
51
48
58
57
50
47
44
62
46
43
53
42
49
45
64
tMAS-1
tMAS0
tMAS1
tMAS2
tMAS3
tMAS4
tMAS5
tMAS6
α (°KW)

Fig. 5

Fig. 6

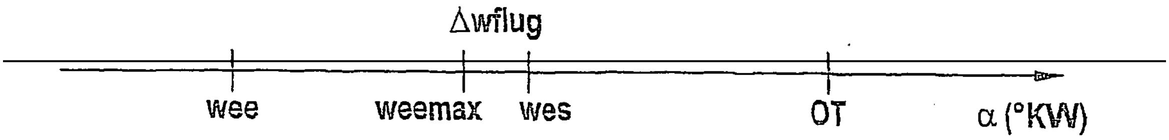


Fig. 7

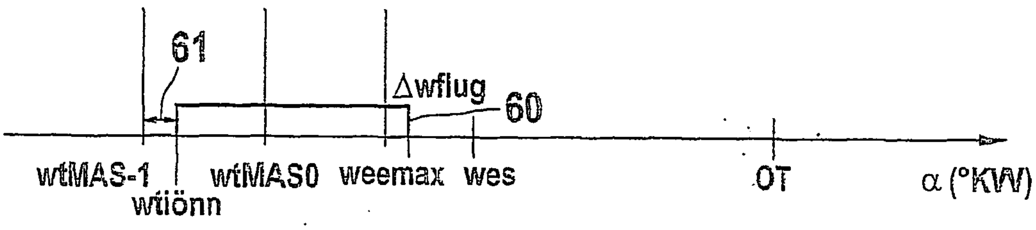


Fig. 8

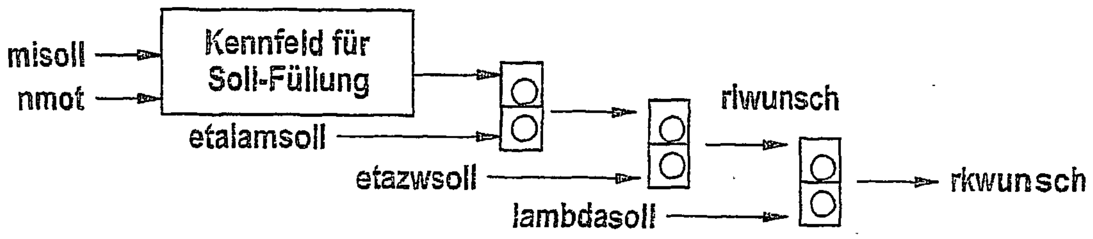


Fig. 9

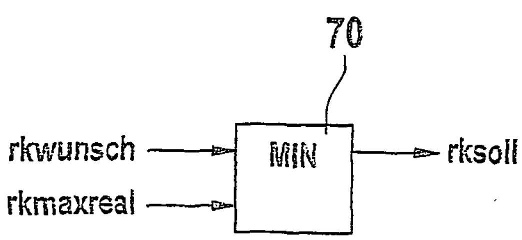

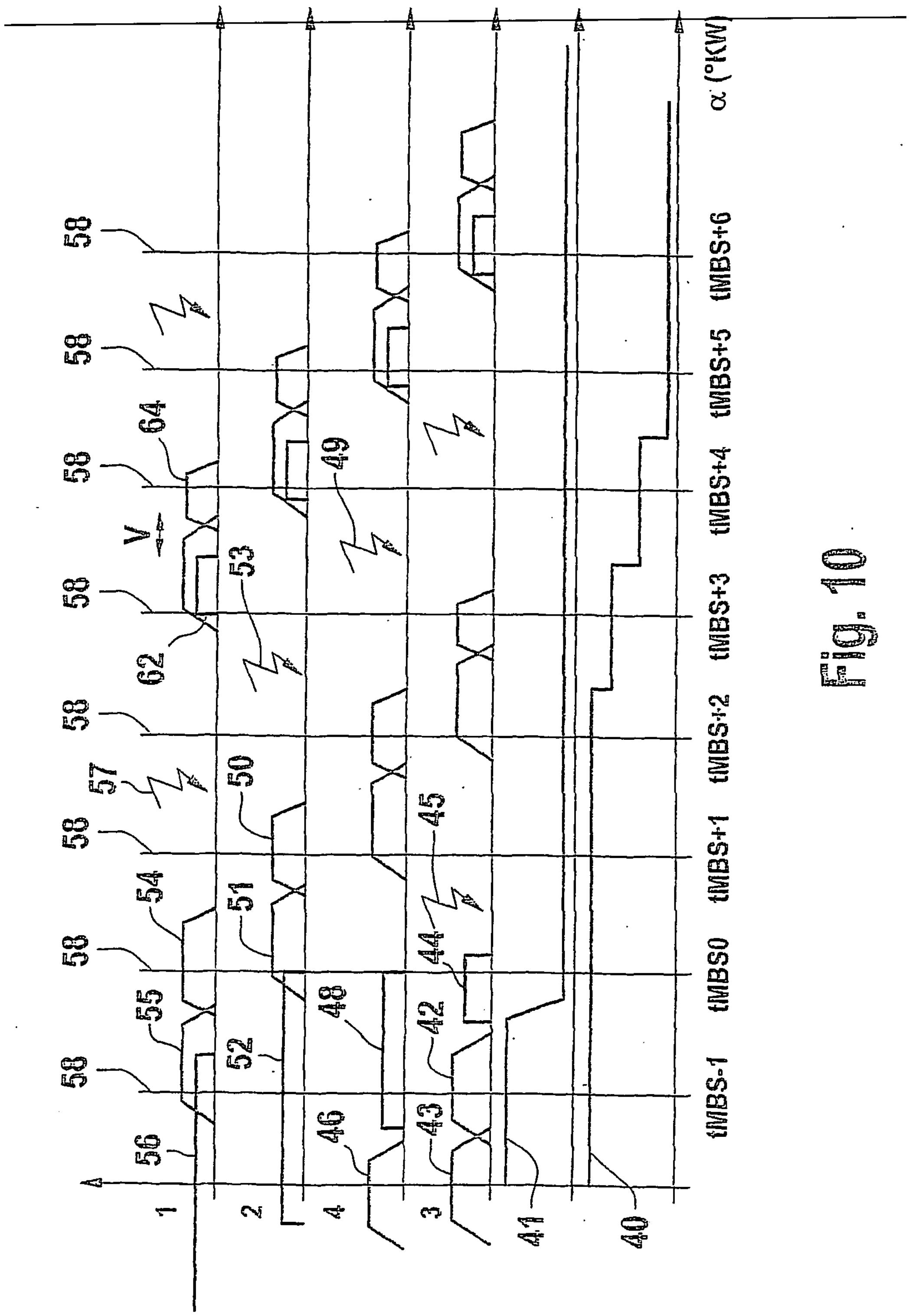

58
58
58
58
58
58
58
64
V
62
53
49
57
50
54
51
55
52
48
45
44
42
56
46
43
1
2
4
3
41
40
tMBS-1
tMBS0
tMBS+1
tMBS+2
tMBS+3
tMBS+4
tMBS+5
tMBS+6
α (°KW)


Fig. 10

Fig. 11

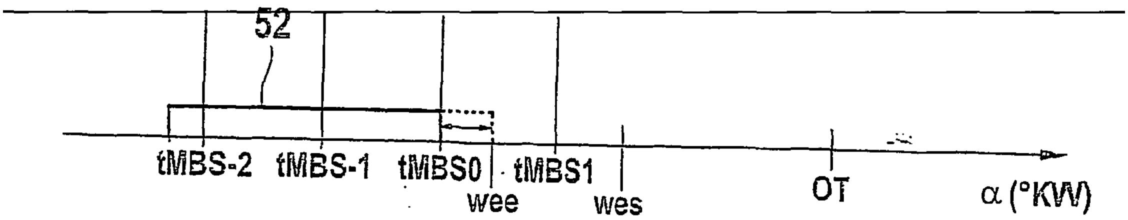


Fig. 12

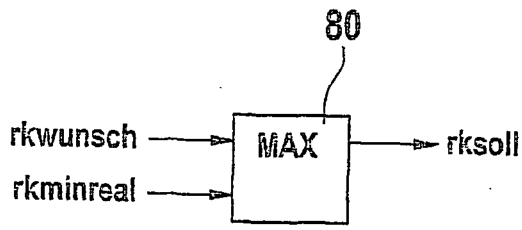


Fig. 13